(19) **Europäisches Patentamt**
**European Patent Office**
**Office européen des brevets**

(11) **EP 4 554 212 A1**

(12) **EUROPEAN PATENT APPLICATION**
published in accordance with Art. 153(4) EPC

(43) Date of publication:
**14.05.2025 Bulletin 2025/20**

(21) Application number: **23835494.8**

(22) Date of filing: **03.07.2023**

(51) International Patent Classification (IPC):
**H04N 19/117** $^{(2014.01)}$      **H04N 19/136** $^{(2014.01)}$
**H04N 19/176** $^{(2014.01)}$      **H04N 19/186** $^{(2014.01)}$
**H04N 19/593** $^{(2014.01)}$      **H04N 19/70** $^{(2014.01)}$

(52) Cooperative Patent Classification (CPC):
**H04N 19/117; H04N 19/136; H04N 19/176;**
**H04N 19/186; H04N 19/593; H04N 19/70**

(86) International application number:
**PCT/JP2023/024662**

(87) International publication number:
**WO 2024/009962 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.07.2022 JP 2022107511**

(71) Applicant: **Sharp Kabushiki Kaisha**
**Sakai City, Osaka 590-8522 (JP)**

(72) Inventors:
• **IKAI Tomohiro**
  **Sakai City, Osaka 590-8522 (JP)**
• **FAN Zheming**
  **Sakai City, Osaka 590-8522 (JP)**
• **AONO Tomoko**
  **Sakai City, Osaka 590-8522 (JP)**
• **YASUGI Yukinobu**
  **Sakai City, Osaka 590-8522 (JP)**

(74) Representative: **Müller-Boré & Partner**
**Patentanwälte PartG mbB**
**Friedenheimer Brücke 21**
**80639 München (DE)**

(54) **CCLM PREDICTION UNIT, VIDEO DECODING DEVICE, AND VIDEO ENCODING DEVICE**

(57)    To reduce the amount of memory needed for CCLM prediction. Provided is a CCLM prediction unit for generating a prediction image of a chroma image by using a luma image, the CCLM prediction unit including a CCLM prediction parameter derivation unit configured to derive a CCLM prediction parameter including a first weight, a second weight, and a first offset value by using a reference pixel of a reference image adjacent to a target block and an adjacent pixel to the reference pixel, and a CCLM prediction filter unit configured to generate a chroma prediction image by using two luma pixels including a target pixel of the target block and an adjacent pixel to the target pixel and the CCLM prediction parameter, in which the CCLM prediction filter unit derives a pixel value of a prediction pixel from the sum of a product of the target pixel and the first weight, a product of the adjacent pixel to the target pixel and the second weight, and the first offset value.

(a)

(b)

| intra_chroma_pred_mode | IntraPredModeY | | | | |
|---|---|---|---|---|---|
| | 0 | 50 | 18 | 1 | X ( 0<=X<=66 ) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 0 | 50 | 18 | 1 | X |

**FIG. 8**

**Description**

Technical Field

An embodiment of the present invention relates to a CCLM prediction unit, a video decoding apparatus, and a video coding apparatus. This application claims priority based on JP 2022-107511 filed on July 4, 2022, the contents of which are incorporated herein by reference.

Background Art

A video coding apparatus which generates coded data by coding a video, and a video decoding apparatus which generates decoded images by decoding coded data are used for efficient transmission or recording of videos.

Specific video coding schemes include, for example, H.264/AVC and High-Efficiency Video Coding (HEVC), Versatile Video Coding (VVC), and the like.

In such a video coding scheme, images (pictures) constituting a video are managed in a hierarchical structure including slices obtained by splitting an image, Coding Tree Units (CTUs) obtained by splitting a slice, Coding Units (CUs) obtained by splitting a coding tree unit, and Transform Units (TUs) obtained by splitting a coding unit, and are coded/decoded for each CU.

In such a video coding scheme, usually, a prediction image is generated based on a locally decoded image that is obtained by coding/decoding an input image, and a prediction error (which may be referred to also as a "difference image" or a "residual image") obtained by subtracting the prediction image from the input image (source image) is coded.

Generation methods of prediction images include inter picture prediction (inter prediction) and intra picture prediction (intra prediction). NPL 1 can be exemplified as a recent technology for video coding and decoding.

In addition, in recent video coding and decoding techniques, Convolutional cross-component model (CCCM) prediction using a target image and an adjacent image has been disclosed as one Cross-component linear model (CCLM) for generating a prediction image of chroma pixels from luma pixels.

In CCCM prediction, linear prediction parameters are derived using a plurality of decoded images adjacent to a target block, and the chrominance of the target block is predicted from the linear prediction model (CCLM model).

Citation List

Non Patent Literature

NPL 1: "AHG12: Convolutional cross-component model (CCCM) for intra prediction", Joint Video Exploration Team (JVET) of ITU-T SG 16 WP 3 and ISO/IEC JTC 1/SC 29/WG 11, JVET-Z0064

Summary of Invention

Technical Problem

Since a plurality of polynomial linear models are used in CCCM processing, a problem exists in that the amount of calculation for deriving parameters becomes very large. In addition, since a linear model for seven parameters including one target pixel, four adjacent pixels, one nonlinear element of the target pixel, and one bias is derived, a problem exists in that the amount of calculation necessarily becomes large.

Solution to Problem

Provided is a CCLM prediction unit for generating a prediction image of a chroma image by using a luma image, the CCLM prediction unit including a CCLM prediction parameter derivation unit configured to derive a CCLM prediction parameter including a first weight, a second weight, and a first offset value by using a reference pixel of a reference image adjacent to a target block and an adjacent pixel to the reference pixel, and a CCLM prediction filter unit configured to generate a chroma prediction image by using two luma pixels including a target pixel of the target block and an adjacent pixel to the target pixel and the CCLM prediction parameter, in which the CCLM prediction filter unit derives a pixel value of a prediction pixel from the sum of a product of the target pixel and the first weight, a product of the adjacent pixel to the target pixel and the second weight, and the first offset value.

The position of the adjacent pixel in the reference image and the target image is a pixel $(x + 1, y)$ to the right of the target pixel $(x, y)$.

Provided is a video decoding apparatus including the CCLM prediction unit according to claim 1, and a parameter decoder configured to decode an index indicating a position of an adjacent pixel from coded data, in which the CCLM prediction parameter derivation unit keeps the number of CCLM prediction parameters constant regardless of the index, and derives the CCLM prediction parameters by switching the position of the adjacent pixel to the reference pixel according to the index, and the CCLM filter unit derives a prediction image by switching the adjacent pixel according to the index.

Provided is a video coding apparatus including the CCLM prediction unit according to claim 1, and a parameter coder configured to code an index indicating a position of an adjacent pixel, the index being derived from an image, in which the CCLM prediction parameter derivation unit keeps the number of CCLM prediction parameters constant regardless of the index, and derives the CCLM prediction parameters by switching the position of the adjacent pixel to the reference pixel according to the index, and the CCLM filter unit derives a prediction image by switching the adjacent pixel according to the index.

The parameter decoder decodes the index from coded data of a sequence header, a slice header, or a CTU header, and derives a flag indicating whether to perform CCLM prediction from coded data, and the CCLM filter unit derives a prediction image of the target block.

Provided is a CCLM prediction unit for generating a prediction image of a chroma image by using a luma image, the CCLM prediction unit including a CCLM prediction parameter derivation unit configured to derive a CCLM prediction parameter and a CCLM prediction filter unit configured to generate a chroma prediction image by using a luma reference image and the CCLM prediction parameter, in which the CCLM prediction unit includes a linear predictor configured to derive two parameters as a multiplication coefficient and a bias coefficient, and a linear predictor configured to derive three or more parameters, and

a multi-model for classifying a luma signal into a group according to a magnitude of the luma signal and deriving a plurality of types of the CCLM prediction parameters according to the classification, and a single model for deriving one type of the CCLM prediction parameter, and

in a case of the multi-model, three or more parameters are not derived.

The CCLM prediction unit decodes a syntax element including whether to perform classification into two groups, and in a case that the syntax element indicates that one group is to be used, further decodes a syntax element indicating whether to derive three or more parameters.

The CCLM prediction unit decodes a syntax element indicating whether to derive three or more parameters, and in a case that the syntax element indicates two parameters, further decodes a syntax element indicating whether to perform classification into two groups.

Advantageous Effects of Invention

According to one aspect of the present invention, CCCM prediction brings an effect that derivation of linear prediction parameters becomes simpler.

Brief Description of Drawings

FIG. 1 is a schematic diagram illustrating a configuration of an image transmission system according to the present embodiment.
FIG. 2 is a diagram illustrating a hierarchical structure of data of a coding stream.
FIG. 3 is a schematic diagram illustrating types (mode numbers) of intra prediction modes.
FIG. 4 is a schematic diagram illustrating a configuration of a video decoding apparatus.
FIG. 5 is a schematic diagram illustrating a configuration of an intra prediction parameter derivation unit.
FIG. 6 is a diagram illustrating a reference region used for intra prediction.
FIG. 7 is a diagram illustrating a configuration of an intra prediction image generation unit.
FIG. 8(a) is a block diagram illustrating an example of a configuration of a CCLM prediction unit according to an embodiment of the present invention, and FIG. 8(b) is a diagram illustrating a method of deriving IntraPredModeC.
FIG. 9(a) to FIG. 9(e) are diagrams illustrating pixels to be referred to in deriving a CCLM prediction parameter according to an embodiment of the present invention.
FIG. 10(a) is a diagram illustrating an example of a combination of [luminance and chrominance] used in CCLM prediction in one model according to the present embodiment. FIG. 10(b) is a diagram illustrating an example of CCLM prediction (MMLM prediction) in two models according to the present embodiment.
FIG. 11 is a block diagram illustrating a configuration of a video coding apparatus.
FIG. 12 is a schematic diagram illustrating a configuration of an intra prediction parameter derivation unit.

FIG. 13 is a diagram illustrating positions of reference pixels according to an embodiment of the present invention.

FIG. 14 is a diagram illustrating a syntax structure according to an embodiment of the present invention.

FIG. 15 is a diagram illustrating a syntax structure according to an embodiment of the present invention.

FIG. 16 is a diagram illustrating a syntax structure according to an embodiment of the present invention.

FIG. 17 is a diagram illustrating a syntax structure according to an embodiment of the present invention.

FIG. 18 is a flowchart illustrating an operation of a CCLM prediction unit according to an embodiment of the present invention.

FIG. 19 is a flowchart illustrating an operation of the CCLM prediction unit according to an embodiment of the present invention.

Description of Embodiments

First Embodiment

Embodiments of the present invention will be described below with reference to the drawings.

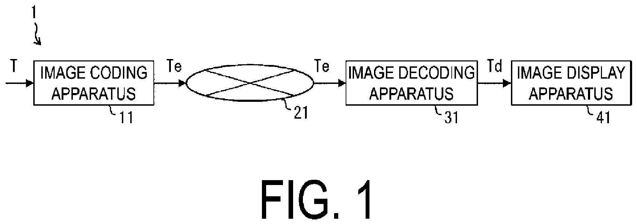

FIG. 1 is a schematic diagram illustrating a configuration of an image transmission system 1 according to the present embodiment.

The image transmission system 1 is a system in which a coding stream obtained by coding a coding target image is transmitted, the transmitted coding stream is decoded, and thus an image is displayed. The image transmission system 1 includes a video coding apparatus (image coding apparatus) 11, a network 21, a video decoding apparatus (image decoding apparatus) 31, and a video display apparatus (image display apparatus) 41.

An image T is input to the video coding apparatus 11.

The network 21 transmits a coding stream Te generated by the video coding apparatus 11 to the video decoding apparatus 31. The network 21 is the Internet, a Wide Area Network (WAN), a Local Area Network (LAN), or a combination thereof. The network 21 is not limited to a bidirectional communication network and may be a unidirectional communication network that transmits broadcast waves for terrestrial digital broadcasting, satellite broadcasting, or the like. The network 21 may be substituted by a storage medium in which the coding stream Te is recorded, such as a Digital Versatile Disc (DVD) (trade name) or a Blue-ray Disc (BD) (trade name).

The video decoding apparatus 31 decodes each of the coding streams Te transmitted from the network 21 and generates one or multiple decoded images Td.

The video display apparatus 41 displays all or part of one or multiple decoded images Td generated by the video decoding apparatus 31. For example, the video display apparatus 41 includes a display device such as a liquid crystal display and an organic Electro-luminescence (EL) display. Examples of display types include stationary, mobile, and HMD. In addition, in a case that the video decoding apparatus 31 has a high processing capability, an image having high image quality is displayed, and in a case that the video decoding apparatus has a lower processing capability, an image which does not require high processing capability and display capability is displayed.

Operators

Operators used in the present specification will be described below.

">>" indicates a right bit shift, "<<" indicates a left bit shift, "&" indicates a bitwise AND, "|" indicates a bitwise OR, "|=" indicates an OR assignment operator, and "‖" indicates a logical sum.

x ? y:z is a ternary operator that takes y if x is true (not 0) and takes z if x is false (0).

Clip3(a, b, c) is a function to clip c to a value of a to b, and a function to return a in a case that c is smaller than a (c < a), return b in a case that c is greater than b (c > b), and return c in the other cases (provided that a is smaller than or equal to b (a <= b)).

abs(a) is a function that returns the absolute value of a.

Int(a) is a function that returns the integer value of a.

floor(a) is a function that returns the maximum integer equal to or smaller than a.

ceil(a) is a function that returns the minimum integer equal to or greater than a.

a/d represents division of a by d (round down decimal places).

a^b represents the b-th power of a.

Structure of Coding Stream Te

Prior to the detailed description of the video coding apparatus 11 and the video decoding apparatus 31 according to the present embodiment, a data structure of the coding stream Te generated by the video coding apparatus 11 and decoded by the video decoding apparatus 31 will be described.

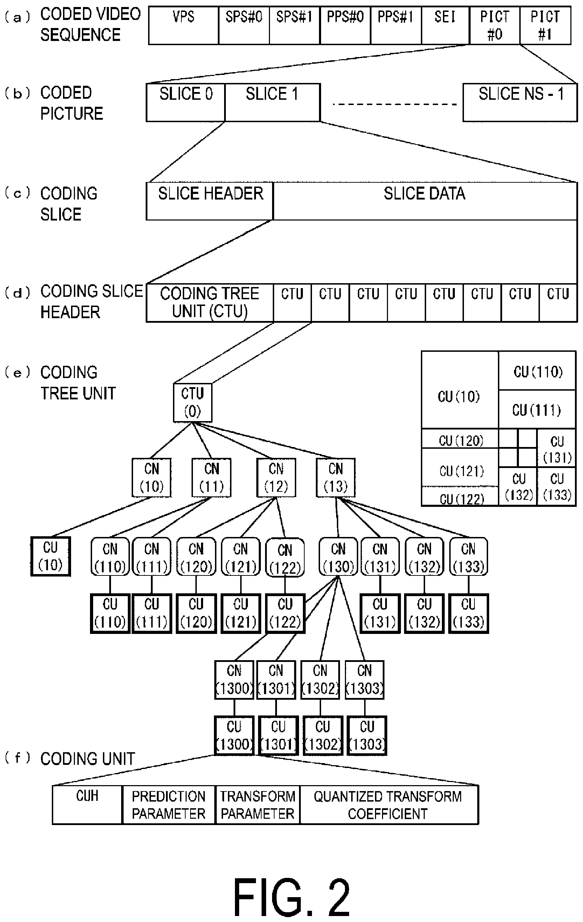

FIG. 2 is a diagram illustrating a hierarchical structure of data of the coding stream Te. The coding stream Te includes, as an example, a sequence and multiple pictures constituting the sequence.

(a) to (f) of FIG. 2 are diagrams illustrating a coded video sequence predefining a sequence SEQ, a coded picture defining a picture PICT, a coding slice defining a slice S, a coding slice data defining slice data, a coding tree unit included in the coding slice data, and a coding unit included in the coding tree unit, respectively.

Coded Video Sequence

In the coded video sequence, a set of data referred to by the video decoding apparatus 31 to decode a sequence SEQ to be processed is defined. As illustrated in FIG. 2(a), the sequence SEQ includes a Video Parameter Set, a Sequence Parameter Set SPS, a Picture Parameter Set PPS, a picture PICT, and Supplemental Enhancement Information SEI.

The video parameter set VPS defines, in a video including multiple layers, a set of coding parameters common to multiple video images and a set of coding parameters relating to multiple layers and individual layers included in the video.

In the sequence parameter sets SPSs, a set of coding parameters referred to by the video decoding apparatus 31 to decode a target sequence is defined. For example, a width and a height of a picture are defined. Note that multiple SPSs may exist. In that case, any of the multiple SPSs is selected from the PPS.

In the picture parameter sets (PPS), a set of coding parameters that the video decoding apparatus 31 refers to in order to decode each picture in the target sequence is defined. For example, a PPS includes a reference value for a quantization step size used in picture decoding (pic_init_qp_minus26) and the like. Note that multiple PPSs may exist. In that case, any of the multiple PPSs is selected from each picture in a target sequence.

Coded Picture

In the coded picture, a set of data referred to by the video decoding apparatus 31 to decode a picture PICT to be processed is defined. The picture PICT includes slice 0 to slice NS - 1 (NS is the total number of slices included in the picture PICT) as illustrated in FIG. 2.

Note that, in a case that it is not necessary to distinguish each of the slice 0 to the slice NS-1 below, numeric suffixes of reference signs may be omitted. In addition, the same applies to other data with suffixes included in the coding stream Te which will be described below.

Coding Slice

In each coding slice, a set of data referred to by the video decoding apparatus 31 to decode a slice S to be processed is defined. The slice includes a slice header and slice data as illustrated in FIG. 2(c).

The slice header includes a coding parameter group referred to by the video decoding apparatus 31 to determine a decoding method for a target slice. Slice type indication information (slice_type) indicating a slice type is one example of a coding parameter included in the slice header.

Examples of slice types that can be indicated by the slice type indication information include (1) an I slice for which only intra prediction is used for coding, (2) a P slice for which unidirectional prediction or intra prediction is used for coding, and (3) a B slice for which unidirectional prediction, bidirectional prediction, or intra prediction is used for coding. Note that the inter prediction is not limited to uni-prediction and bi-prediction, and a prediction image may be generated by using a larger number of reference pictures. Hereinafter, in a case of a slice being referred to as a P or B slice, it indicates a slice including a block in which inter prediction can be used.

Note that the slice header may include a reference to the picture parameter set PPS (pic_parameter_set_id).

Coding Slice Data

In coding slice data, a set of data referred to by the video decoding apparatus 31 to decode slice data to be processed is defined. The slice data includes CTUs as illustrated in FIG. 2(d). A CTU is a block in a fixed size (for example, 64 x 64) constituting a slice, and may also be called a Largest Coding Unit (LCU).

Coding Tree Unit

In FIG. 2(e), a set of data referred to by the video decoding apparatus 31 to decode a CTU to be processed is specified. A CTU is split into coding units CU which are basic coding processing units through recursive Quad Tree (QT) splitting, Binary Tree (BT) splitting, or Ternary Tree (TT) splitting. The BT split and the TT split are collectively referred to as Multi Tree (MT) split. A node of a tree structure obtained by recursive quad tree split is referred to as a Coding Node. An intermediate node of a quad tree, a binary tree, and a ternary tree is a coding node, and a CTU itself is also defined as the highest coding node.

The CT includes, as CT information, a split flag indicating whether to perform split.

Furthermore, in a case that a size of a CTU is 64 x 64 pixels, a size of a CU may take any of 64 x 64 pixels, 64 x 32 pixels, 32 x 64 pixels, 32 x 32 pixels, 64 x 16 pixels, 16 x 64 pixels, 32 x 16 pixels, 16 x 32 pixels, 16 x 16 pixels, 64 x 8 pixels, 8 x 64 pixels, 32 x 8 pixels, 8 x 32 pixels, 16 x 8 pixels, 8 x 16 pixels, 8 x 8 pixels, 64 x 4 pixels, 4 x 64 pixels, 32 x 4 pixels, 4 x 32 pixels, 16 x 4 pixels, 4 x 16 pixels, 8 x 4 pixels, 4 x 8 pixels, and 4 x 4 pixels.

Coding Unit

As illustrated in FIG. 2(f), a set of data referred to by the video decoding apparatus 31 to decode the coding unit to be processed is specified. Specifically, a CU includes a CU header CUH, a prediction parameter, a transform parameter, a quantized transform coefficient, and the like. In the CU header, a prediction mode and the like are defined.

The prediction processing may be performed for each CU or performed for each sub-CU, the sub-CU being obtained by further splitting the CU. In a case that a CU and a sub-CU have an equal size, the number of sub-CUs in the CU is one. In a case that a CU is larger in size than a sub-CU, the CU is split into sub-CUs. For example, in a case that a CU has a size of 8 x 8, and a sub-CU has a size of 4 x 4, the CU is split into four sub-CUs which include two horizontal splits and two vertical splits.

There are two types of predictions (prediction modes), which are intra prediction and inter prediction. The intra prediction refers to a prediction in an identical picture, and the inter prediction refers to prediction processing performed between different pictures (for example, between pictures of different display times).

Although transform and quantization processing is performed for each CU, entropy coding of a quantized transform coefficient may be performed for each subblock such as 4 x 4.

Prediction Parameters

A prediction image is derived by prediction parameters associated with blocks. The prediction parameters include intra prediction and inter prediction parameters.

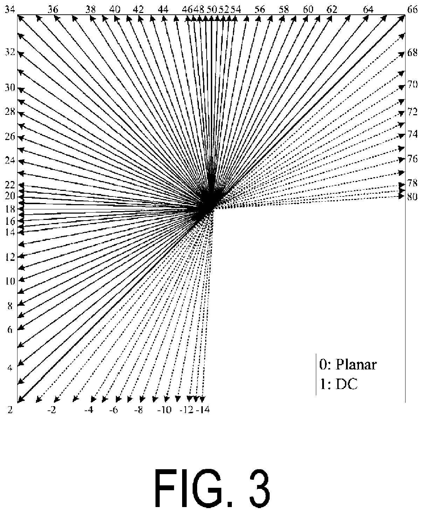

The prediction parameters for intra prediction will be described below. The intra prediction parameters include a luma prediction mode IntraPredModeY and a chroma prediction mode IntraPredModeC. FIG. 3 is a schematic diagram illustrating types (mode numbers) of intra prediction modes. There are 67 types (0 to 66) intra prediction modes, for example, as illustrated in the drawing. For example, there are planar prediction (0), DC prediction (1), and angular prediction (2 to 66). Furthermore, for chroma, a CCLM mode (81 to 83) may be added.

The syntax element for deriving the intra prediction parameters include, for example, intra_luma_mpm_flag, mpm_idx, mpm_remainder, and the like.

MPM

intra_luma_mpm_flag is a flag indicating whether the luma prediction mode IntraPredModeY of the target block and the Most Probable Mode (MPM) match each other. The MPM is a prediction mode included in an MPM candidate list mpmCandList[]. The MPM candidate list is a list that stores candidates that are inferred to have high probability of being applied to the target block, based on the intra prediction mode of a neighboring block and a prescribed intra prediction mode. In a case that intra_luma_mpm_flag is 1, the luma prediction mode IntraPredModeY of the target block is derived by using the MPM candidate list and the index mpm_idx.

$$\mathrm{IntraPredModeY = mpmCandList[mpm\_idx]}$$

REM

In a case that intra_luma_mpm_flag is 0, the luma prediction mode IntraPredModeY is derived by using mpm_remainder. Specifically, an intra prediction mode is selected from mode RemIntraPredMode, which remains after removing the intra prediction mode included in the MPM candidate list from the whole intra prediction mode.

Configuration of Video Decoding Apparatus

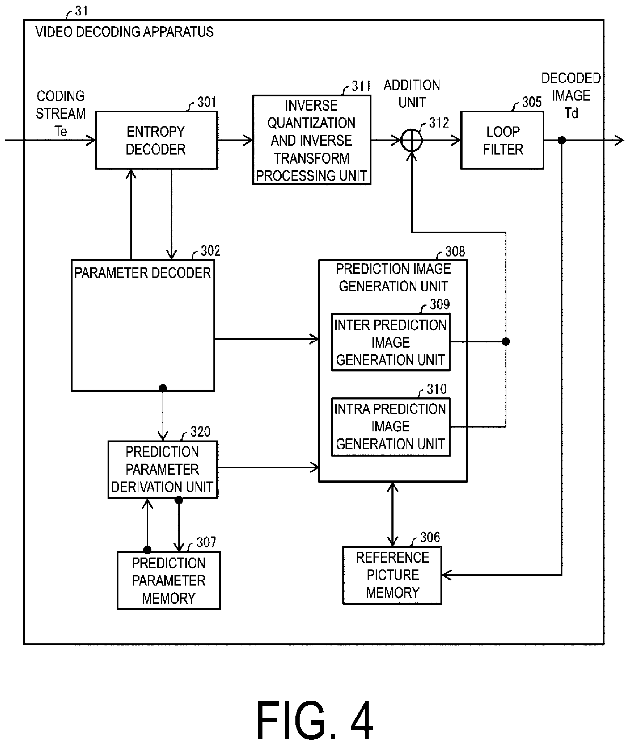

A configuration of the video decoding apparatus 31 (FIG. 4) according to the present embodiment will be described.

The video decoding apparatus 31 includes an entropy decoder 301, a parameter decoder (a prediction image decoding apparatus) 302, a loop filter 305, a reference picture memory 306, a prediction parameter memory 307, a prediction image generation unit 308, an inverse quantization and inverse transform processing unit 311, an addition unit 312, and a prediction parameter derivation unit 320. Note that a configuration in which the loop filter 305 is not included in the video decoding apparatus 31 may be used in accordance with the video coding apparatus 11 described below.

The parameter decoder 302 further includes a header decoder 3020, a CT information decoder 3021, and a CU decoder 3022 (prediction mode decoder), and the CU decoder 3022 further includes a TU decoder 3024. These may be collectively referred to as a decoding module. The header decoder 3020 decodes, from coded data, parameter set information such as the VPS, the SPS, and the PPS, and a slice header (slice information). The CT information decoder 3021 decodes a CT from coded data. The CU decoder 3022 decodes a CU from coded data. In a case that a TU includes a prediction error, the TU decoder 3024 decodes QP update information (quantization correction value) and a quantization prediction error (residual_coding) from coded data.

The prediction parameter derivation unit 320 includes an inter prediction parameter derivation unit 303 and an intra prediction parameter derivation unit 304.

The prediction image generation unit 308 includes an inter prediction image generation unit 309 and an intra prediction image generation unit 310.

In addition, although an example in which CTU and CU are used as a unit of processing will be described below, the unit of processing is not limited to this example, and processing may be performed for each sub-CU. Alternatively, the CTU and the CU may be interpreted as a block and the sub-CU as a subblock, and processing may be performed in units of blocks or subblocks.

The entropy decoder 301 performs entropy decoding on the coding stream Te input from the outside and separates and decodes individual codes (syntax elements). The separated codes include prediction information to generate a prediction image, a prediction error to generate a difference image, and the like. The entropy decoder 301 outputs the separated codes to the parameter decoder 302.

Configuration of Intra Prediction Parameter Derivation Unit 304

The intra prediction parameter derivation unit 304 derives an intra prediction parameter, for example, an intra prediction mode IntraPredMode, with reference to the prediction parameters stored in the prediction parameter memory 307 based on codes input from the entropy decoder 301. The intra prediction parameter derivation unit 304 outputs the derived intra prediction parameter to the prediction image generation unit 308, and stores the intra prediction parameter in the prediction parameter memory 307. The intra prediction parameter derivation unit 304 may derive different intra prediction modes between luma and chroma.

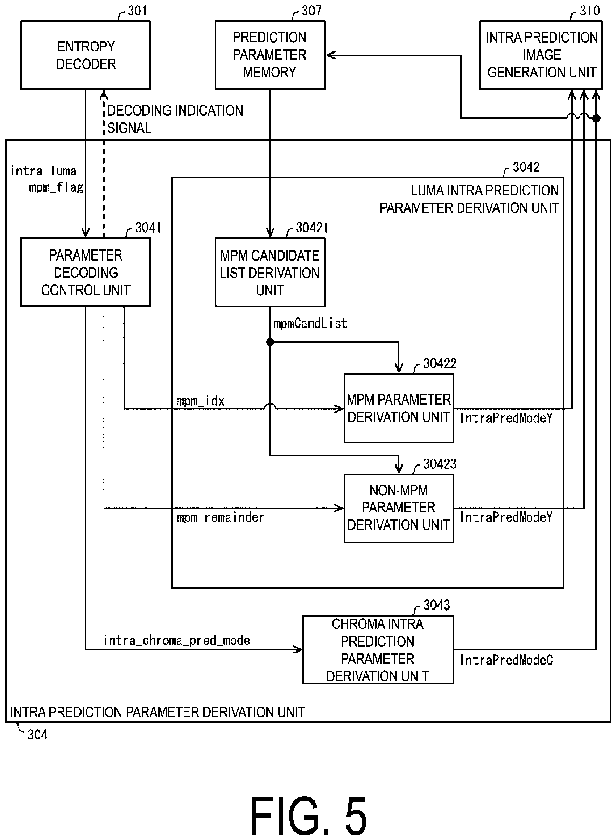

FIG. 5 is a schematic diagram illustrating a configuration of the intra prediction parameter derivation unit 304 of the prediction parameter derivation unit 320. As illustrated in the drawing, the intra prediction parameter derivation unit 304 includes a parameter decoding control unit 3041, a luma intra prediction parameter derivation unit 3042, and a chroma intra prediction parameter derivation unit 3043.

The parameter decoding control unit 3041 indicates to the entropy decoder 301 to decode a syntax element, and receives the syntax element from the entropy decoder 301. In a case that intra_luma_mpm_flag is 1 in the syntax element, the parameter decoding control unit 3041 outputs mpm_idx to an MPM parameter derivation unit 30422 in the luma intra prediction parameter derivation unit 3042. In addition, in a case that intra_luma_mpm_flag is 0, the parameter decoding control unit 3041 outputs mpm_remainder to a non-MPM parameter derivation unit 30423 of the luma intra prediction parameter derivation unit 3042. In addition, the parameter decoding control unit 3041 outputs the intra prediction parameter intra_chroma_pred_mode for chrominance to the chroma intra prediction parameter derivation unit 3043.

The luma intra prediction parameter derivation unit 3042 includes an MPM candidate list derivation unit 30421, the MPM parameter derivation unit 30422, and the non-MPM parameter derivation unit 30423 (derivation unit).

The MPM parameter derivation unit 30422 derives the luma prediction mode IntraPredModeY with reference to the MPM candidate list mpmCandList[] derived by the MPM candidate list derivation unit 30421 and mpm_idx, and outputs the luma prediction mode IntraPredModeY to the intra prediction image generation unit 310.

The non-MPM parameter derivation unit 30423 derives IntraPredMode Y from the MPM candidate list mpmCandList[] and mpm_remainder, and outputs IntraPredModeY to the intra prediction image generation unit 310.

The chroma intra prediction parameter derivation unit 3043 derives the chroma prediction mode IntraPredModeC from intra_chroma_pred_mode and outputs the chroma prediction mode IntraPredModeC to the intra prediction image generation unit 310.

The loop filter 305 is a filter provided in the coding loop, and is a filter that removes block distortion and ringing distortion and improves image quality. The loop filter 305 applies a filter such as a deblocking filter, a sample adaptive offset (SAO), and an adaptive loop filter (ALF) to a decoded image of a CU generated by the addition unit 312.

The reference picture memory 306 stores the decoded image of the CU generated by the addition unit 312 in a predetermined position for each target picture and target CU.

The prediction parameter memory 307 stores a prediction parameter in a position predetermined for each CTU or CU to be decoded. Specifically, the prediction parameter memory 307 stores the parameter decoded by the parameter decoder 302, the parameter derived by the prediction parameter derivation unit 320, and the like.

Parameters derived by the prediction parameter derivation unit 320 are input to the prediction image generation unit 308. In addition, the prediction image generation unit 308 reads out a reference picture from the reference picture memory 306.

The prediction image generation unit 308 generates a prediction image of a block or a subblock by using the prediction parameter and the read reference picture (reference picture block) in the prediction mode indicated by the prediction mode predMode. Here, the reference picture block refers to a set of pixels (referred to as a block because they are normally rectangular) on a reference picture and is a region that is referred to for generating a prediction image.

Intra Prediction Image Generation Unit 310

In a case that a prediction mode predMode indicates an intra prediction mode, the intra prediction image generation unit 310 performs intra prediction by using an intra prediction parameter input from the intra prediction parameter derivation unit 304 and a reference pixel read from the reference picture memory 306.

Specifically, the intra prediction image generation unit 310 reads, from the reference picture memory 306, neighboring blocks located on a target picture within a prescribed range from a target block. The prescribed range corresponds to left, top left, top, and top right neighboring blocks of the target block, and reference areas vary depending on the intra prediction mode.

The intra prediction image generation unit 310 refers to read decoded pixel values and the prediction mode indicated by IntraPredMode to generate a prediction image of the target block. The intra prediction image generation unit 310 outputs the generated prediction image of the block to the addition unit 312.

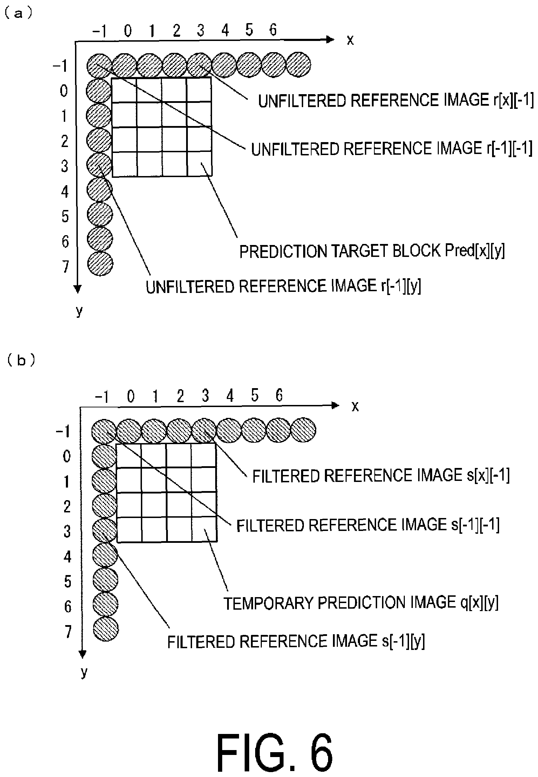

The generation of a prediction image based on the intra prediction mode will be described below. In Planar prediction, DC prediction, and Angular prediction, a decoded peripheral region adjacent to (proximate to) a prediction target block is configured as a reference region R. Then, the pixels on the reference region R are extrapolated in a particular direction to generate the prediction image. For example, the reference region R may be configured as an L-shaped region (e.g., the region indicated as circular pixels with diagonal lines in FIG. 6(a)) including the left and upper regions (or further the top left, top right, and bottom left regions) of the prediction target block.

Details of Prediction Image Generation Unit

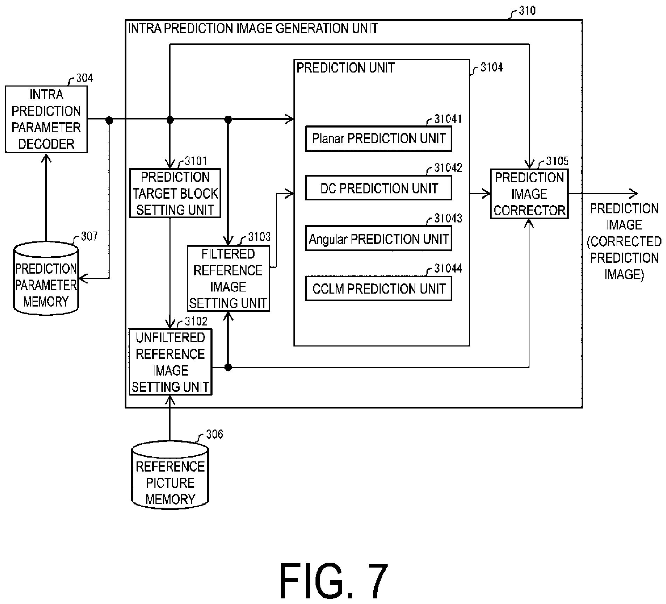

Next, a configuration of the intra prediction image generation unit 310 will be described in detail with reference to FIG. 7. The intra prediction image generation unit 310 includes a prediction target block setting unit 3101, an unfiltered reference image setting unit 3102 (a first reference image setting unit), a filtered reference image setting unit 3103 (second reference image setting unit), a prediction unit 3104 (intra prediction unit 3104), and a prediction image corrector 3105 (a prediction image corrector, a filter switching unit, and a weighting factor change unit).

The prediction unit 3104 generates a temporary prediction image (pre-correction prediction image) of the prediction target block based on each reference pixel (unfiltered reference image) on the reference region R, the filtered reference image generated by applying the reference pixel filter (a first filter), and the intra prediction mode and outputs the temporary prediction image to the prediction image corrector 3105. The prediction image corrector 3105 corrects the temporary prediction image according to the intra prediction mode, generates a prediction image (corrected prediction image), and outputs the prediction image.

Each part included in the intra prediction image generation unit 310 will be described below.

Prediction Target Block Setting Unit 3101

The prediction target block setting unit 3101 sets a target CU as a prediction target block and outputs information about the prediction target block (prediction target block information). The prediction target block information includes at least a size, a position, and an index indicating luminance or chrominance of the prediction target block.

Unfiltered Reference Image Setting Unit 3102

The unfiltered reference image setting unit 3102 sets an adjacent peripheral region of the prediction target block as the reference region R based on the size and position of the prediction target block. Subsequently, each pixel value (unfiltered reference image or boundary pixel) in the reference region R is set equal to each decoded pixel value at the corresponding position on the reference picture memory 306. A line r[x][-1] of decoded pixels adjacent to the upper side of the prediction target block and a column r[-1][y] of decoded pixels adjacent to the left side of the prediction target block illustrated in FIG. 6(a) are unfiltered reference images.

Filtered Reference Image Setting Unit 3103

The filtered reference image setting unit 3103 applies the reference pixel filter (first filter) to an unfiltered reference image according to the intra prediction mode to derive a filtered reference image s[x][y] at each position (x, y) on the reference region R. Specifically, a low-pass filter is applied to the position (x, y) and the unfiltered reference images in the vicinity thereof to derive a filtered reference image (FIG. 6(b)). Note that it is not always necessary to apply the low-pass filter to all the intra prediction modes, and the low-pass filter may be applied to some of the intra prediction modes. Note that, while the filter applied to the unfiltered reference image on the reference region R by the filtered reference pixel setting unit 3103 is referred to as a "reference pixel filter (first filter)", the filter for correcting a temporary prediction image by the prediction image corrector 3105 to be described below is referred to as a "boundary filter (second filter)".

Configuration of Intra Prediction Unit 3104

The intra prediction unit 3104 generates a temporary prediction image (temporary prediction pixel value or pre-correction prediction image) of the prediction target block based on the intra prediction mode, the unfiltered reference image, and the filtered reference pixel value, and outputs the temporary prediction image to the prediction image corrector 3105. The prediction unit 3104 includes a Planar prediction unit 31041, a DC prediction unit 31042, and an Angular prediction unit 31043, a CCLM prediction unit (prediction image generation apparatus) 31044 therein. The prediction unit 3104 selects a specific prediction unit according to the intra prediction mode, and inputs the unfiltered reference image and the filtered reference image. The relationship between the intra prediction mode and the corresponding prediction unit is as follows.

- Planar prediction: Planar prediction unit 31041
- DC prediction: DC prediction unit 31042
- Angular prediction: Angular prediction unit 31043
- CCLM prediction: CCLM prediction unit 31044

Planar Prediction

The Planar prediction unit 31041 generates a temporary prediction image q[x][y] by linearly adding a plurality of filtered reference images s[x][y] in accordance with the distance between a prediction target pixel position and a reference pixel position, and outputs the temporary prediction image to the prediction image corrector 3105.

DC Prediction

The DC prediction unit 31042 derives a DC prediction value corresponding to the average value of the filtered reference images s[x][y] and outputs the temporary prediction image q[x][y] having the DC prediction value as a pixel value.

Angular Prediction

The angular prediction unit 31043 generates the temporary prediction image q[x][y] using the filtered reference images s[x][y] in the prediction direction (reference direction) indicated by the intra prediction mode, and outputs the temporary prediction image to the prediction image corrector 3105.

Cross-Component Linear Model (CCLM) Prediction

The CCLM prediction unit 31044 predicts the pixel value of chrominance based on the pixel value of luminance. Specifically, this is a scheme in which a prediction image of a chroma image (Cb, Cr) is generated by using a linear model based on a decoded luma image. CCLM prediction will be described below.

Configuration of Prediction Image Corrector 3105

The prediction image corrector 3105 corrects the temporary prediction image output from the prediction unit 3104 according to the intra prediction mode. Specifically, the prediction image corrector 3105 derives a prediction image (corrected prediction image) Pred obtained by correcting the temporary prediction image, by performing weighted addition (weighted average) of the unfiltered reference image and the temporary prediction image for each pixel of the temporary prediction image in accordance with the distance between the reference region R and the target prediction pixel. Note that, in some intra prediction modes (e.g., Planar prediction, DC prediction, etc.), the prediction image corrector 3105 need not correct the temporary prediction image, and the output of the prediction unit 3104 may be used as a prediction image.

The inverse quantization and inverse transform processing unit 311 performs inverse quantization on a quantized transform coefficient input from the entropy decoder 301 to calculate a transform coefficient. This quantized transform coefficient is a coefficient obtained by performing, in coding processing, a frequency transform such as a Discrete Cosine Transform (DCT) or a Discrete Sine Transform (DST) on prediction errors for quantization. The inverse quantization and inverse transform processing unit 311 performs an inverse frequency transform such as an inverse DCT or an inverse DST on the obtained transform coefficient to calculate a prediction error. The inverse quantization and inverse transform processing unit 311 outputs the prediction error to the addition unit 312.

The addition unit 312 adds the prediction image of the block input from the prediction image generation unit 308 and the prediction error input from the inverse quantization and inverse transform processing unit 311 for each pixel, and generates a decoded image of the block.

The addition unit 312 stores the decoded image of the block in the reference picture memory 306, and also outputs it to the loop filter 305.

Configuration of Video Coding Apparatus

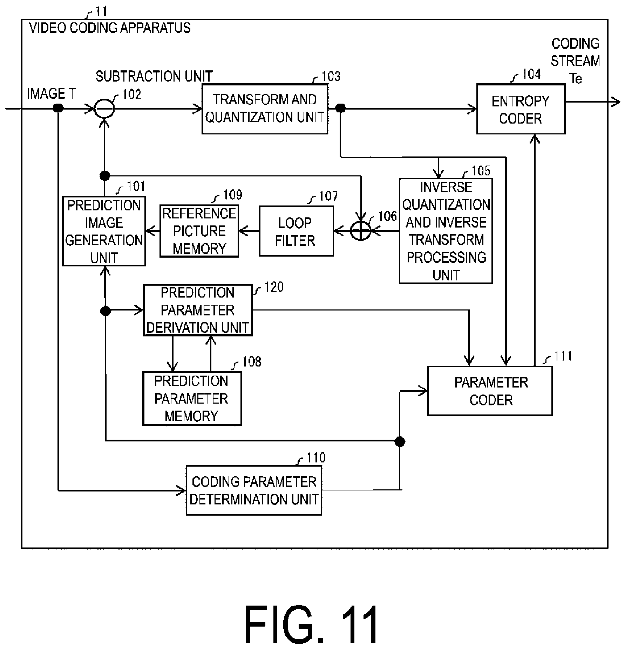

Next, a configuration of the video coding apparatus 11 according to the present embodiment will be described. FIG. 11 is a block diagram illustrating a configuration of the video coding apparatus 11 according to the present embodiment. The video coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit or a frame memory) 108, a reference picture memory (a reference image storage unit or a frame memory) 109, a coding parameter determination unit 110, a parameter coder 111, a prediction parameter derivation unit 120, and an entropy coder 104.

The prediction image generation unit 101 generates a prediction image for each CU that is a region obtained by splitting each picture of an image T. The operation of the prediction image generation unit 101 is the same as that of the prediction image generation unit 308 already described, and description thereof will be omitted.

The subtraction unit 102 subtracts a pixel value of the prediction image of a block input from the prediction image generation unit 101 from a pixel value of an image T to generate a prediction error. The subtraction unit 102 outputs the prediction error to the transform and quantization unit 103.

The transform and quantization unit 103 performs a frequency conversion on the prediction error input from the subtraction unit 102 to calculate a transform coefficient, and derives a quantized transform coefficient by quantization. The transform and quantization unit 103 outputs the quantized transform coefficient to the entropy coder 104 and the inverse quantization and inverse transform processing unit 105.

The inverse quantization and inverse transform processing unit 105 is the same as the inverse quantization and inverse transform processing unit 311 (FIG. 4) of the video decoding apparatus 31, and descriptions thereof are omitted. The calculated prediction error is output to the addition unit 106.

The entropy coder 104 receives input of the quantized transform coefficient from the transform and quantization unit 103, and input of coding parameters from the parameter coder 111. The coding parameters include, for example, parameters of the intra prediction mode (intra _luma_mpm_flag, mpm_idx, mpm_remainder) and a code such as a prediction mode predMode.

The entropy coder 104 performs entropy coding on the split information, the coding parameters, the quantized transform coefficient, and the like to generate and output a coding stream Te.

The parameter coder 111 includes a header coder 1110, a CT information coder 1111, and a CU coder 1112 (prediction mode coder), which are not illustrated. The CU coder 1112 further includes a TU coder 1114.

The prediction parameter derivation unit 120 derives an inter prediction parameter and an intra prediction parameter from the inter prediction parameter derivation unit 112 and the intra prediction parameter derivation unit 113. The inter prediction parameter and intra prediction parameter derived are output to the parameter coder 111.

Configuration of Intra Prediction Parameter Derivation Unit 113

The intra prediction parameter coder 113 derives a format for coding (for example, mpm_idx, mpm_remainder, or the like) from the intra prediction mode IntraPredMode input from the coding parameter determination unit 110. The intra prediction parameter derivation unit 113 includes a partly identical configuration to a configuration in which the intra prediction parameter derivation unit 304 derives the intra prediction parameters.

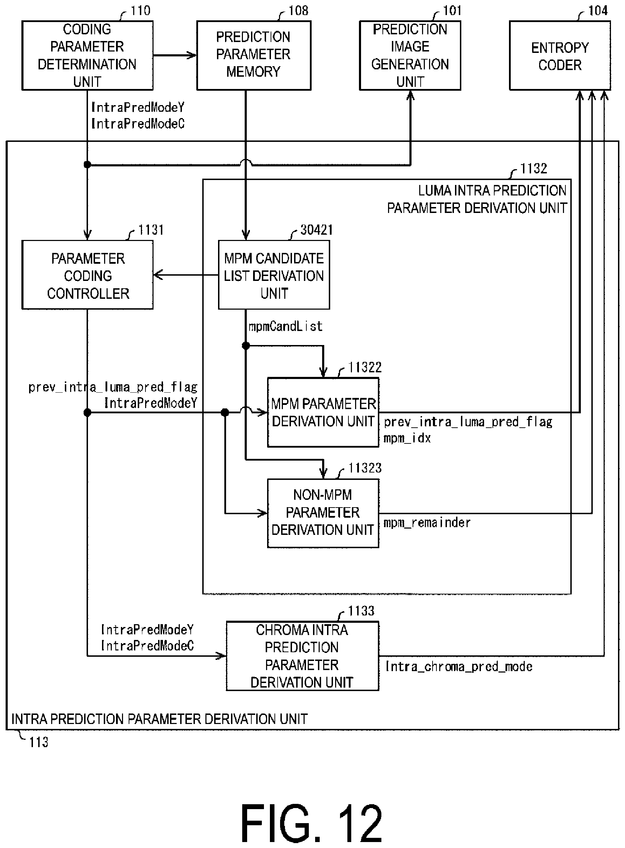

FIG. 12 is a schematic diagram illustrating a configuration of the intra prediction parameter derivation unit 113 of the prediction parameter derivation unit 120. The intra prediction parameter derivation unit 113 includes a parameter coding controller 1131, a luma intra prediction parameter derivation unit 1132, and a chroma intra prediction parameter derivation unit 1133.

To the parameter coding controller 1131, the luma prediction mode IntraPredModeY and the chroma prediction mode IntraPredModeC are input from the coding parameter determination unit 110. The parameter coding controller 1131 refers to an MPM candidate list mpmCandList[] of the reference candidate list derivation unit 30421, and determines intra_luma_mpm_flag. Then, intra_luma_mpm_flag and IntraPredModeY are output to the luma intra prediction parameter derivation unit 1132. IntraPredModeC is output to the chroma intra prediction parameter derivation unit 1133.

The luma intra prediction parameter derivation unit 1132 includes an MPM candidate list derivation unit 30421 (a candidate list derivation unit), the MPM parameter derivation unit 11322, and the non-MPM parameter derivation unit 11323 (a coder, a derivation unit).

The MPM candidate list derivation unit 30421 refers to the intra prediction mode of neighboring blocks stored in the prediction parameter memory 108, and derives the MPM candidate list mpmCandList[]. In a case that intra_luma_mpm_flag is 1, the MPM parameter derivation unit 11322 derives mpm_idx from IntraPredModeY and mpmCandList[], and outputs mpm_idx to the entropy coder 104. In a case that intra_luma_mpm_flag is 0, the non-MPM parameter derivation unit 11323 derives mpm_remainder from IntraPredModeY and mpmCandList[], and outputs mpm_remainder to the entropy coder 104.

The chroma intra prediction parameter derivation unit 1133 derives intra_chroma_pred_mode from IntraPred-ModeY and IntraPredModeC and outputs intra_chroma_pred_mode.

The addition unit 106 adds a pixel value of the prediction image of the block input from the prediction image generation unit 101 and the prediction error input from the inverse quantization and inverse transform processing unit 105 for each pixel to generate a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may include only a deblocking filter, for example.

The prediction parameter memory 108 stores the prediction parameters generated by the coding parameter derivation unit 120 at a predetermined position for each target picture and CU. The transform coefficient or the like generated by the transform and quantization unit 103 may be stored.

The reference picture memory 109 stores the decoded image generated by the loop filter 107 at a predetermined position for each target picture and CU.

The coding parameter determination unit 110 selects one set among multiple sets of coding parameters. The coding parameters include QT, BT, or TT split information described above, a prediction parameter, or a parameter to be coded which is generated in relation to the aforementioned elements. The prediction image generation unit 101 generates a prediction image by using these coding parameters.

The coding parameter determination unit 110 calculates an RD cost value indicating the magnitude of an amount of information and a coding error for each of the multiple sets. The RD cost value is, for example, the sum of an amount of code and the value obtained by multiplying a square error by a coefficient λ. The coding parameter determination unit 110 selects a set of coding parameters of which the calculated cost value is a minimum value. In this manner, the entropy coder 104 outputs a selected set of coding parameters as a coding stream Te. The coding parameter determination unit 110 outputs the determined coding parameters to the parameter coder 111, the prediction parameter derivation unit 120, and the prediction image generation unit 101.

Note that a computer may be used to implement some of the video coding apparatus 11 and the video decoding apparatus 31 in the above-described embodiments, for example, the entropy decoder 301, the parameter decoder 302, the loop filter 305, the prediction image generation unit 308, the inverse quantization and inverse transform processing unit 311, the addition unit 312, the prediction parameter derivation unit 320, the prediction image generation unit 101, the subtraction unit 102, the transform and quantization unit 103, the entropy coder 104, the inverse quantization and inverse transform processing unit 105, the loop filter 107, the coding parameter determination unit 110, a parameter coder 111, and the prediction parameter derivation unit 120. In that case, this configuration may be realized by recording a program for realizing such control functions on a computer-readable recording medium and causing a computer system to read and perform the program recorded on the recording medium. Note that the "computer system" described here refers to a computer system built into either the video coding apparatus 11 or the video decoding apparatus 31 and is assumed to include an OS and hardware components such as a peripheral apparatus. In addition, the "computer-readable recording medium" refers to a portable medium such as a flexible disk, a magneto-optical disk, a ROM, and a CD-ROM, and a storage apparatus such as a hard disk built into the computer system. Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

A part or all of the video coding apparatus 11 and the video decoding apparatus 31 in the embodiment described above may be realized as an integrated circuit such as a Large Scale Integration (LSI). Each function block of the video coding apparatus 11 and the video decoding apparatus 31 may be individually realized as processors, or part or all may be integrated into processors. In addition, the circuit integration technique is not limited to LSI, and implementation as a dedicated circuit or a multi-purpose processor may be adopted. In addition, in a case that a circuit integration technology that replaces LSI appears as the semiconductor technologies advance, an integrated circuit based on that technology may be used.

Although embodiments of the present invention have been described above in detail with reference to the drawings, the specific configurations thereof are not limited to those described above and various design changes or the like can be made without departing from the spirit of the invention.

Application Example

The above-mentioned video coding apparatus 11 and the video decoding apparatus 31 can be utilized being installed to various apparatuses performing transmission, reception, recording, and reconstruction of videos. Further, a video may be a natural video imaged by a camera or the like, or may be an artificial video (including CG and GUI) generated by a computer or the like.

Chroma Intra Prediction Mode

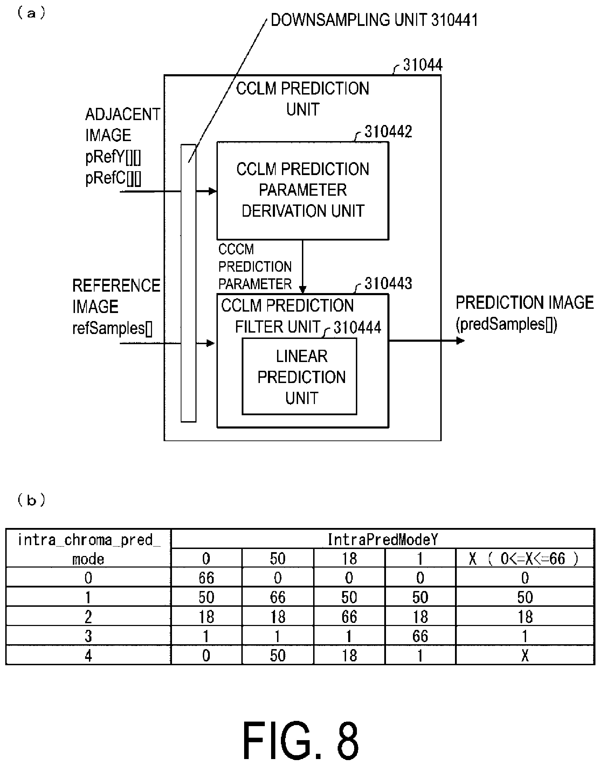

Next, CCLM prediction will be described with reference to FIGS. 8 to 23.

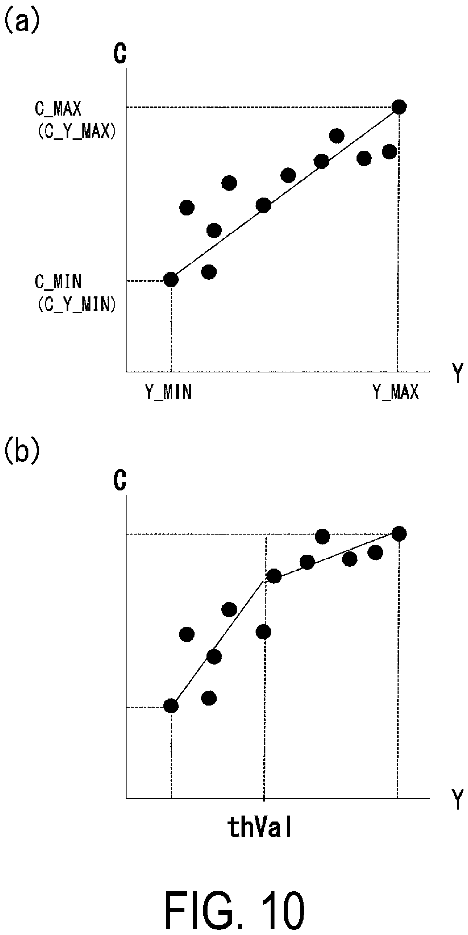

FIG. 10 is a diagram illustrating an overview of luma-chroma prediction. In the luma-chroma prediction, chrominance is linearly predicted from luminance. (a) illustrates a case in which one prediction model is used for a target block, and one CCLM prediction parameter is derived for the target block. (b) illustrates a case in which a plurality of prediction models are used for the target block, and two or more (here, two) CCLM prediction parameters are derived for the target block. The luma-chroma prediction with a plurality of prediction models is referred to as a Multi Mode Linear Model (MMLM). In addition, linear prediction using two parameters including one weighting factor a and one offset coefficient b (bias) is called CCLM in the narrow sense, and linear prediction using N parameters (N > 2) including two or more weighting factors $a_k$ and one offset coefficient b (bias) is called a Convolutional cross-component model (CCCM). a and b, and $a_k$ and b are referred to as CCLM prediction parameters, which are derived using images adjacent to the target block. Note that a shift value, such as shiftA described below, may be derived in addition to the weight and the bias values in the CCLM prediction parameter.

However, the shift value is not included in the number of CCLM prediction parameters of the present specification. The following configurations may be defined as follows.

The linear prediction using a, b, and shiftA as parameters is defined as two-parameter linear prediction.

The linear prediction using a0, a1, b, and shiftA as parameters is defined as three-parameter linear prediction.

This is because, in the calculation amount related to the derivation of the CCLM prediction parameter and the calculation amount related to the linear prediction in the CCLM prediction, the deriving processing of shiftA and the shift processing by shiftA are negligible, and thus shiftA is not included in the number of parameters.

In addition, the following prediction may be used as the luma-chroma prediction.

INTRA_LT_CCLM (81) left and top reference, 1 model, 2 parameters
INTRA_L_CCLM (82) left reference, 1 model, 2 parameters
INTRA_T_CCLM (83) top reference, 1 model, 2 parameters
INTRA_LT_MMLM (84) left and top reference, two models, two parameters
INTRA_L_MMLM (85) left reference, 2 models, 2 parameters
INTRA_T_MMLM (86) top reference, two models, two parameters
INTRA_LT_CCCM_SINGLE (87) left and top reference, 2 models, 3 parameters
INTR_L_CCM_SINGLE (88) left reference, 2 models, 3 parameters
INTR_T_CCM_SINGLE (89) top reference, 2 models, 3 parameters
INTRA_LT_MMLM_CCCM (90) left and top reference, 2 models, 3 parameters
INTRA_L_MMLM_CCCM (91) left reference, 2 models, 3 parameters

INTRA_T_MMLM_CCCM (92) top reference, 2 models, 3 parameters

The values in parentheses are the corresponding IntraPredModeC values. It is not limited to this value. In addition, a configuration in which a part of the prediction is used instead of all the prediction may be adopted. In particular, in the exclusive configuration to be described below, the plural models and plural adjacent parameters (the above two models and three parameters) indicated by INTRA_{LT, L, T}_MMLM_CCCM are not used.

The intra prediction parameter derivation unit 304 refers to the luma prediction mode IntraPredModeY, intra_chroma_pred_mode, and the table of FIG. 8(b) to derive the chroma prediction mode IntraPredModeC described above. The figure illustrates a method of deriving IntraPredModeC. In a case that intra_chroma_pred_mode is 0 to 3 and 4, the intra prediction parameter derivation unit 304 derives IntraPredModeC depending on the value of IntraPredModeY. For example, in a case that intra_chroma_pred_mode is 0 and IntraPredModeY is 0, IntraPredModeC is 66. In addition, in a case that intra_chroma_pred_mode is 3 and IntraPredModeY is 50, IntraPredModeC is 1. Note that the values of IntraPredModeY and IntraPredModeC represent the intra prediction modes in FIG. 3.

As illustrated in FIG. 8(a), the CCLM prediction unit 31044 includes a downsampling unit 310441, a CCLM prediction parameter derivation unit (parameter derivation unit) 310442, and a CCLM prediction filter unit 310443.

First Example of Three- Parameter Configuration

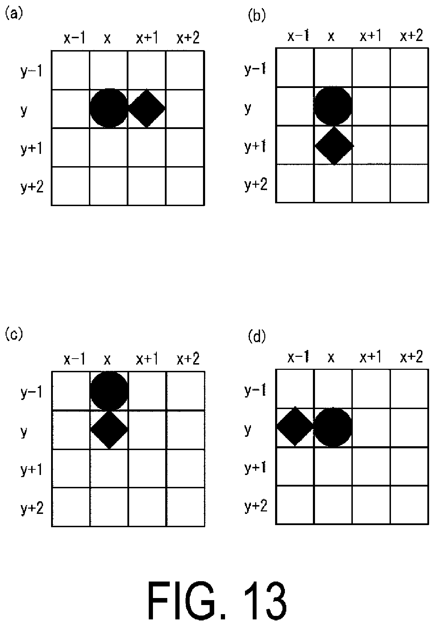

FIG. 13 is a diagram illustrating positional relationships between target pixels and adjacent pixels according to the present embodiment. The CCLM prediction filter unit 310443 of this configuration performs CCLM prediction using a target pixel refSamples[x * SubWidthC][y * SubHeightC] of the luminance corresponding to the position (x, y) of a chroma pixel to be predicted and its adjacent pixel refSamples[x * SubWidthC + dX][y * SubHeightC + dY]. Then, a prediction image predSamples [x][y] of the chroma pixel position (x, y) is generated. The figure illustrates the following four examples. SubWidthC and SubHeightC are a sampling ratio of a luma pixel to a chroma pixel.

(a) a target pixel (x, y) and a right adjacent pixel (x + 1, y) predSamples [x][y] = (a0 * refSamples[x * SubWidthC][y * SubHeightC] + a1 * refSamples[x * SubWidthC + 1][y * SubHeightC]) > > shiftA) + b

(b) a target pixel (x, y) and a lower adjacent pixel (x, y + 1) predSamples [x][y] = (a0 * refSamples[x * SubWidthC][y * SubHeightC] + a1 * refSamples[x * SubWidthC][y * SubHeightC + 1]) > > shiftA) + b

(c) a target pixel (x, y) and a left adjacent pixel (x - 1, y) predSamples [x][y] = (a0 * refSamples[x * SubWidthC][y * SubHeightC] + a1 * refSamples[x * SubWidthC - 1][y * SubHeightC]) > > shiftA) + b

(d) a target pixel (x, y) and an upper adjacent pixel (x, y - 1) predSamples [x][y] = (a0 * refSamples[x * SubWidthC][y * SubHeightC] + a1 * refSamples[x * SubWidthC][y * SubHeightC - 1]) > > shiftA) + b

In the simulations, the configuration (a) generates a prediction image with the highest accuracy more frequently. Therefore, the CCLM prediction filter unit 310443 of this configuration derives the CCLM prediction parameter in the configuration (a) having at least the adjacent pixel position (dX, dY) = (1, 0), and performs CCLM filtering processing.

In addition, the CCLM prediction parameter derivation unit 310442 derives the following temporary reference arrays refX[][] and refY[] using the reference pixel pRefY (x, y) included in the reference region of the neighboring block (for example, the left, top, and top right of the target block) and the adjacent pixel pRefY (x + dX, y + dY) thereof. Here, although the bias term is the last term, it may be the first term.

```
for ((x, y) in reference region) {

        refX[0][cnt]=pRefY[x][y]

        refX[1][cnt]=pRefY[x+dX][y+dY]

        refX[2][cnt]=1

        refY[cnt] = pRefC[x/SubWidthC][y/SubHeightC]

        cnt=cnt+1

    }
```

Wherein (x, y), (dX, dY) are coordinates of luminance, either x = -3.. -1, y = 0.. cbHeight - 1 or x = -0.. cbWidth - 1, y = -1.. -3, (dX, dY) = (1, 0), (0, 1), (-1, 0), (0, -1).

For (x, y) of the reference region, refX and refY are repeatedly set, and cnt is incremented by 1 in each repetition.

The CCLM prediction parameter derivation unit 310442 derives the following matrix sumXX and vector sumXY from the reference images pRefY and pRefC.

```
for (i=0; i<3; i++) {

  for (j=0; j<3;j++) {

    sumXX[i][j] = Σ refX[i][cnt]*refX[j][cnt]

    sumXY[i] = Σ refX[i][cnt]*refY[cnt]

  }

}
```

Here, $\Sigma$ represents the sum for cnt. Note that sumXX and sumXY may be directly derived from pRefY and pRefC without using refX[][] and refY[].

$$\mathrm{sumXX[i][j] = sumXY[j] = 0, \ i=0..2, \ j=0..2}$$

for ((x, y) in reference region) {

$$\mathrm{sumXX[0][0] = sumXY[0][0] + pRefY[x][y]*pRefY[x][y]}$$

$$\mathrm{sumXX[0][1] = sumXX[0][1] + pRefY[x][y]*pRefY[x+dX][y+dY]}$$

$$\mathrm{sumXX[1][1] = sumXY[1][1] + pRefY[x+dX][y+dY]* pRefY[x+dX][y+dY]}$$

$$\mathrm{sumXX[0][2] = sumXY[0][2] + pRefY[x][y]}$$

$$\mathrm{sumXX[1][2] = sumXX[1][2] + pRefY[x+dX][y+dY]}$$

$$\mathrm{sumXX[2][2] = sumXY[2][2] + 1}$$

$$\mathrm{sumXY[0] = sumXY[0] + pRefY[x][y]*pRefC[x/SubWidthC][y/SubHeightC]}$$

$$\mathrm{sumXY[1] = sumXY[1] + pRefY[x+dX][y+dY]*pRefC[x/SubWidthC][y/SubHei}$$

$$\mathrm{ghtC]}$$

$$\mathrm{sumXY[2] = sumXY[2] + pRefC[x/SubWidthC][y/SubHeightC]}$$

}

$$\mathrm{sumXX[1][0] = sumXX[0][1]}$$

$$\mathrm{sumXX[2][1] = sumXX[1][2]}$$

Furthermore, a normalization term is added to the diagonal component.

$$\mathrm{sumXX[i][i] = sumXX[i][i] + (1<<(bitDepth-1))}$$

The CCLM prediction parameter derivation unit 310442 derives cparam [k], k = 0..2 by using a linear operation corresponding to cparam = sumXY * inverse (sumXX). Here, inverse(X) is the inverse matrix of X.
$a\theta = cparam[0]$

$a1 = cparam[1]$

$b = cparam[2]$

A CCLM prediction filter unit for generating a chroma prediction image by using a target pixel of the luminance corresponding to a chroma pixel of a target block, its adjacent pixel, and a CCLM prediction parameter is provided, and the intra parameter derivation unit 304 decodes cclm_mode_flag indicating whether to perform CCLM prediction for predicting chrominance from luminance. In a case that cclm_mode_flag is a value (here, 1) indicating that CCLM prediction is performed, a flag cccm_mode_flag indicating whether to perform luma-chroma prediction by using two luma pixels is decoded. In a case that cclm_mode_flag is a value (here, 1) indicating that CCLM prediction is performed, the CCLM prediction unit generates a prediction image of a chroma image by using a luma image. At this time, the CCLM prediction parameter derivation unit 310442 derives a CCLM prediction parameter including a first weight a0, a second weight a1, and a first offset value b by using a reference pixel pRef[x][y] of the reference region of the luminance adjacent to the target block and the adjacent pixel pRef[x + dX][y + dY] of the reference pixel. Furthermore, the CCLM prediction filter unit 310443 derives the pixel value of the predicted pixel predSamples of chrominance from the sum of the product of the reference pixel refSamples [x][y] of the luminance and the first weight a0, the product of the adjacent pixel prefSamples [x + dX] [y + dY] of the luminance and the second weight a1, and the first offset value b.

Here, the position of an adjacent pixel in the reference image and the target image is a pixel $(x + 1, y)$ to the right of the target pixel $(x, y)$.

According to the above description, it is possible to obtain a high-quality prediction image while reducing the amount of calculation by using only the reference pixel, the adjacent pixel, and the bias.

Second Example of Three-Parameter Configuration

In a case that cclm_mode_flag is a value (here, 1) indicating that CCLM prediction is performed, the intra prediction parameter derivation unit 304 further decodes an index cclm_nei_idx indicating the position of a pixel adjacent to the target pixel. cclm_nei_idx selects an adjacent pixel.

(dX, dY) = (1,0) in a case that cclm_nei_idx is 0.
(dX, dY) = (0,1) in a case that cclm_nei_idx is 1.

That is, the CCLM prediction parameters are derived using the adjacent pixels at the relative position (dX, dY) with respect to the reference pixel. The CCLM prediction filter unit 310443 predicts a chroma pixel using a luma reference pixel and an adjacent luma pixel at the relative position (dX, dY). (dX, dY) = (1, 0) to the right of the reference pixel is necessarily included as the position of (dX, dY).

According to the above description, the effect of generating a high-quality prediction image while reducing the calculation amount by using only the reference pixel, the adjacent pixel, and the bias is exhibited.

The number of options is not limited to two, and may be four including the top, bottom, left, and right sides of the reference pixel. An adjacent pixel is selected according to cclm_nei_idx.

(dX, dY) = (1,0) in a case that cclm_nei_idx is 0.
(dX, dY) = (0,1) in a case that cclm_nei_idx is 1.
(dX, dY) = (-1, 0) in a case that cclm_nei_idx is 2.
(dX, dY) = (0, -1) in a case that cclm_nei_idx is 3.

According to the above, the effect of generating a satisfactory prediction image while reducing the calculation amount by using only the reference pixel, the adjacent pixel, and the bias is exhibited.

The CCLM prediction parameter derivation unit keeps the number of CCLM prediction parameters constant regardless of the index and derives the CCLM prediction parameters by switching the position of the adjacent pixel to the reference pixel according to the index, and the CCLM filter unit derives the prediction image by switching the adjacent pixel according to the decoded index.

In a case that multi-model (MMLM) luma-chroma prediction and multi-parameter (CCCM) luma-chroma prediction are used together, the process of deriving the multi-parameter related to the matrix is required as many as the number of models of the multi-model, thereby increasing the amount of calculation. Hereinafter, some examples of an exclusive configuration in which the two types of prediction are not simultaneously used will be described.

First Example of Exclusive Configuration

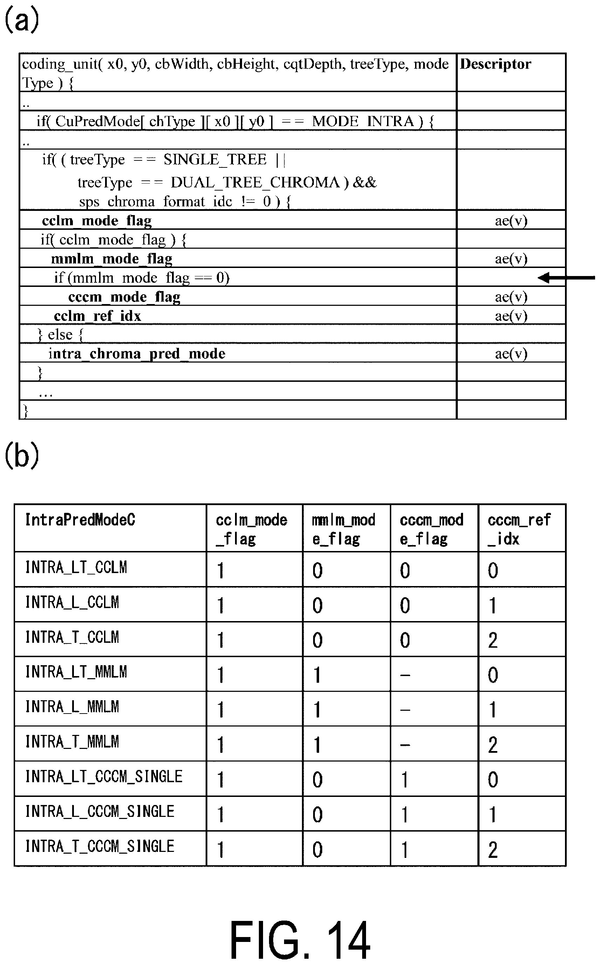

FIG. 14 is a diagram illustrating a syntax structure according to an embodiment of the present invention. As illustrated in (a) of the figure, the intra prediction parameter derivation unit 304 decodes cclm_mode_flag indicating whether to perform CCLM prediction for predicting chrominance from luminance. In a case that cclm_mode_flag is a value (here, 1) indicating that CCLM prediction is performed, a plurality of models (CCCM prediction parameters) are derived, and a flag mmlm_mode_flag indicating whether to perform CCLM prediction is decoded. In a case that mmlm_mode_flag is a value (here, 0) indicating that a plurality of models are not used (mmlm_mode_flag = = 0), a flag cccm_mode_flag indicating whether to perform luma-chroma prediction (CCCM mode) by using a plurality of luma pixels is decoded. In a case that cccm_mode_flag does not appear (in the case of the MMLM mode), cccm_mode_flag is derived as a value (here, 0) indicating that a plurality of target images are not used. In the CCCM mode, the number of parameters required for a filter for generating a predicted pixel increases.

Furthermore, the intra prediction parameter derivation unit 304 may decode the index cclm_ref_idx indicating the position of the reference pixel. (b) of the figure illustrates the relationship between IntraPredModeC and each flag and index. In a case that cclm_ref_idx is 0, the reference pixel is located in the top and left regions of the target block. In a case that cclm_ref_idx is 1, the reference pixel is located in the left region of the target block. In a case that cclm_ref_idx is 2, the reference pixel is located in the top region of the target block. Here, "-" indicates that the syntax element cccm_mode_flag is not to be decoded, and in the case of "_", cccm_mode_flag = 0 is inferred.

According to this configuration, in a case that a plurality of models (multi-models) are used, the flag (cccm_mode _flag) indicating whether to predict a chroma pixel by using a plurality of luma pixels is inferred to be 0 without being decoded. That is, the MMLM mode and the CCCM mode can be made exclusive. Therefore, it is possible to avoid complicated processing such as deriving a plurality of CCLM prediction parameters in each of a plurality of models, and to exhibit a complexity reduction effect while maintaining the performance.

Second Example of Exclusive Configuration

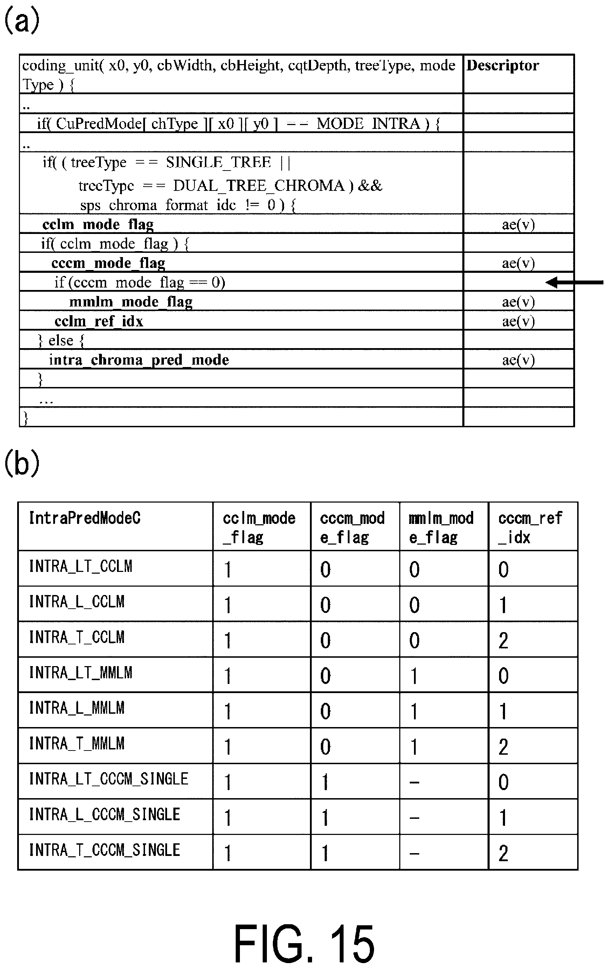

FIG. 15 is a diagram illustrating a syntax structure according to an embodiment of the present invention. It is a diagram illustrating a syntax structure according to an embodiment of the present invention. As illustrated in (a) of the figure, the intra prediction parameter derivation unit 304 decodes cclm_mode_flag indicating whether to perform CCLM prediction for predicting chrominance from luminance. In a case that cclm_mode_flag is a value (here, 1) indicating that CCLM prediction is performed, a flag cccm_mode_flag indicating whether filtering of luma-chroma prediction is performed using a plurality of luma pixels is decoded. In a case that a plurality of reference pixels are not used (cccm_mode_flag = = 0), a plurality of models (CCCM prediction parameters) are derived, and a flag mmlm_mode_flag indicating whether to perform CCLM prediction is decoded. In a case that mmlm_mode_flag does not appear, mmlm_mode_flag is derived as 0 indicating that multi-model is not used.
Furthermore, the intra prediction parameter derivation unit 304 may decode the index cclm_ref_idx indicating the position of the reference pixel. (b) of the figure illustrates the relationship between IntraPredModeC and each flag and index. In a case that cclm_ref_idx is 0, the reference pixels are located in the top and left regions of the target block. In a case that cclm_ref_idx is 1, the reference pixel is located in the left region of the target block. In a case that cclm_ref_idx is 2, the reference pixel is located in the top region of the target block. Here, "-" indicates that the syntax element mmlm_mode_flag is not to be decoded, and in the case of "_", mmlm_mode_flag = 0 is inferred.
According to the present configuration, in a case that a plurality of reference pixels are referred to by a filter for predicting chrominance (CCCM mode), the flag indicating the multi-model (MMLM mode) is inferred as 0 without being decoded. That is, the MMLM mode and the CCCM mode can be made exclusive. Therefore, it is possible to avoid a complicated process of deriving the CCLM prediction parameter of the CCCM mode having a large number of parameters in each of a plurality of models, and to exhibit a complexity reduction effect while maintaining the performance.

Third Example of Exclusive Configuration

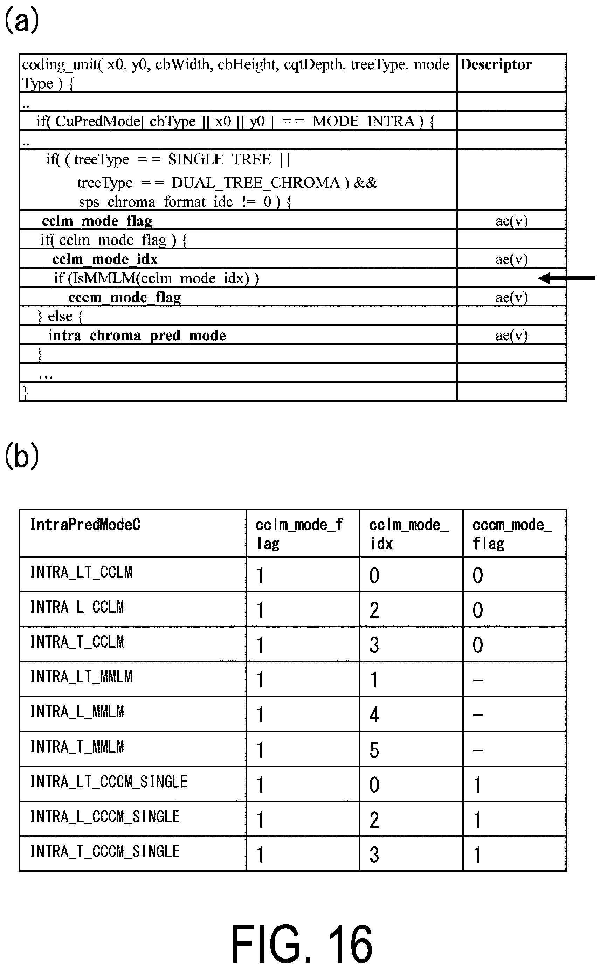

FIG. 16 is a diagram illustrating a syntax structure according to an embodiment of the present invention. As illustrated in (a) of the figure, the intra prediction parameter derivation unit 304 decodes cclm_mode_flag indicating whether to perform CCLM prediction for predicting chrominance from luminance. In a case that cclm_mode_flag is a value (here, 1) indicating that CCLM prediction is performed, an index cclm_mode_idx, indicating whether to perform MMLM prediction and a reference pixel of CCLM prediction, are decoded. MMLM prediction is CCLM prediction using a plurality of models (CCCM prediction parameters). In the CCCM prediction, filtering is performed using a plurality of reference pixels of luminance in order to predict a chroma pixel. In a case that cclm_mode_idx is 0, 2, or 3, the CCLM prediction is not in the MMLM mode, and the reference pixels are located in the top and left regions, the left region, and the top region of the target block, respectively. In a case that cclm_mode_idx is 1, 4, or 5, the CCLM prediction is in the MMLM mode, and the reference pixels are located in the top and left regions, the left region, and the top region of the target block, respectively.
In the case that cclm_mode_idx is any one of values (specific values, 0,2,3 in FIG. 16) indicating that multi-model is not used (IsMMLM (cclm_mode_idx) = = 0), cccm_mode_flag is decoded. cccm_mode_flag is a flag indicating whether to filter a luma-chroma prediction pixel using a plurality of luma pixels. In a case that cccm_mode_flag does not appear, cccm_mode_flag is derived as a value (here, 0) indicating that a plurality of target images are not used. Here, IsMMLM is 1 (TRUE) when cclm_mode_idx is any one of INTRA_LT_MMLM (for example, 1), INTRA_L_MMLM (for example, 4), and INTRA_T_MMLM (for example, 5), and is 0 (FALSE) otherwise. IsMMLM (cclm_mode_idx) = (cclm_mode_idx = = 1) + (cclm_mode_idx = = 4) + (cclm_mode_idx = = 5) may be possible. Here, "+" may be a logical "or" " | ". (b) of the figure illustrates the relationship between IntraPredModeC and each flag and index. Here, "-" indicates that the syntax element cccm_mode_flag is not to be decoded, and in the case of "-", cccm_mode_flag = 0 is inferred.
According to the present configuration, in a case that a plurality of models (multi-model) are used, the flag indicating whether to use the plurality of reference pixels in the filter for predicting chrominance is inferred as 0 without being decoded. That is, the MMLM mode and the CCCM mode can be made exclusive. Therefore, it is possible to avoid a complicated process such as deriving a plurality of CCLM prediction parameters of the CCCM mode in each of a plurality of models, and to exhibit a complexity reduction effect while maintaining the performance.

Fourth Example of Exclusive Configuration

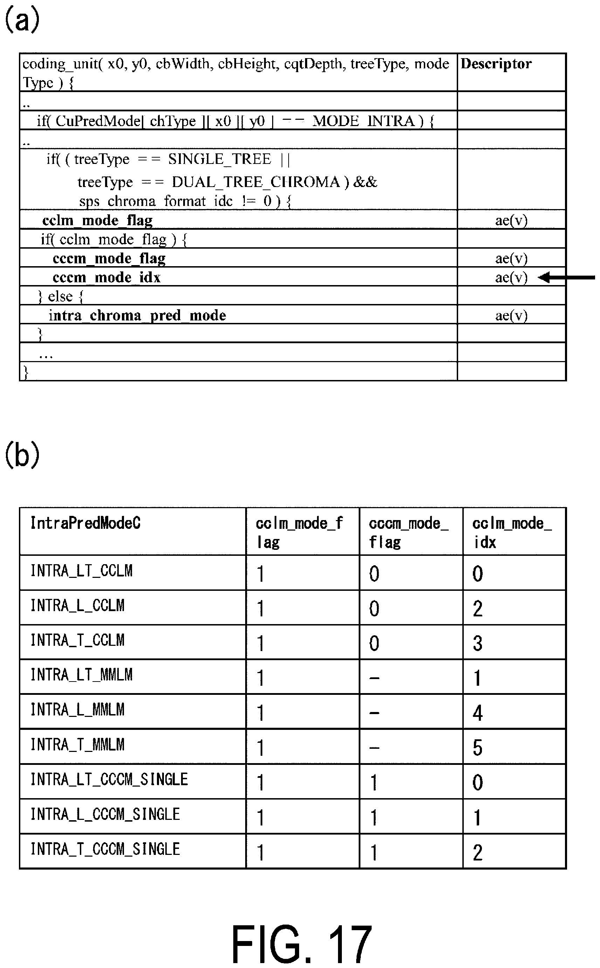

FIG. 17 is a diagram illustrating a syntax structure according to an embodiment of the present invention. As illustrated in 17(a), the intra prediction parameter derivation unit 304 decodes cclm_mode_flag indicating whether to perform CCLM prediction for predicting chrominance from luminance. In a case that cclm_mode_flag is a value (here, 1) indicating that CCLM prediction is performed, cccm_mode_flag indicating whether filtering of luma-chroma prediction of a chroma pixel is to be performed using a plurality of luma pixels is decoded. Furthermore, an index cclm_mode_idx, indicating whether the mode is the MMLM mode and a reference pixel position of the CCLM prediction, is decoded. The MMLM mode is a mode in which CCLM prediction is performed using a plurality of models (CCCM prediction parameters). The value of cclm_mode_idx is as described in <Third Example of Exclusive Configuration>.

Here, the maximum value cMax of cclm_mode_idx is changed in accordance with the value of cccm_mode_flag. cMax is the maximum value in a case that an input value is within a predetermined range. In a case that cccm_mode_flag = = 0, cMax = 5 is set so that the MMLM mode is available, and cclm_mode_idx is decoded using Truncated Binary (TB) of the maximum value cMax. In a case that cccm_mode_flag = = 1, cMax = 2 (a value smaller than the case of cccm_mode_flag = = 0) is set so that the MMMLM mode cannot be used, and cclm_mode_idx is decoded using the TB with cMax. Truncated Rice Binary (TR) with the same cMax as the one with TB may be used instead of TB.

(b) of the figure illustrates the relationship between IntraPredModeC and each flag and index. As described above, in a case that cccm_mode_flag = 1, the value range of cccm_mode_idx is limited and a smaller cMax is set so that the multi-mode is not selected in the CCLM mode.

According to the present configuration, in a case that a plurality of models (multi-model) are used, the flag indicating whether to use the CCCM mode is inferred as 0 without being decoded. That is, the MMLM mode and the CCCM mode can be made exclusive. Therefore, it is possible to avoid a complicated process such as deriving a plurality of CCLM prediction parameters of the CCCM mode in each of a plurality of models, and to exhibit a complexity reduction effect while maintaining the performance.

Furthermore, from <First Example of Exclusive Configuration> to <Fourth Example of Exclusive Configuration>, a configuration in which cclm_nei_idx described in <First Example of Three-Parameter Configuration> is further signaled may be adopted. cclm_nei_idx is an index indicating the position of an adjacent pixel to the target pixel. In FIGS. 14(a) to 17(a), cclm_nei_idx is signaled in a case that cccm_mode_flag indicates CCCM prediction (1 in the present specification). Otherwise, cclm_nei_idx is not signaled and cclm_nei_idx = 0 is inferred.

```
if (cccm_mode_flag) {
    cclm_nei_idx
}
```

Operation Example of Exclusive Configuration

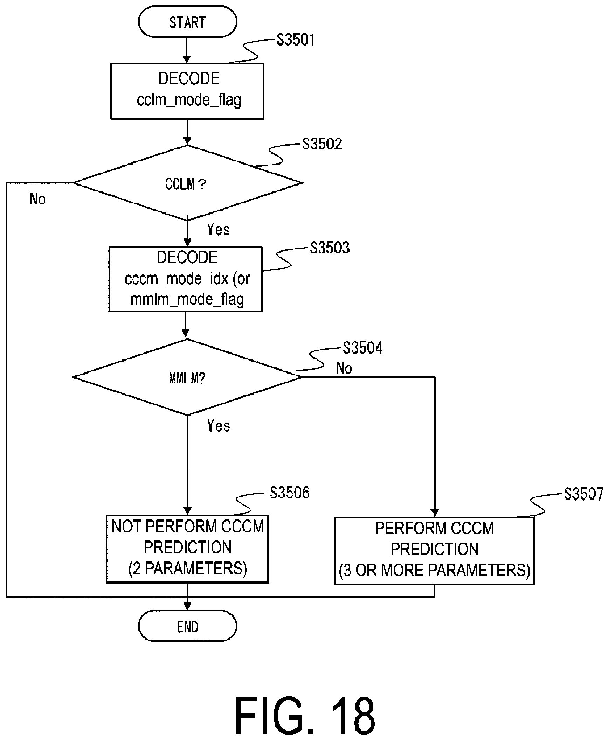

FIG. 18 is a flowchart illustrating an operation of a CCLM prediction unit according to an embodiment of the present invention.

(S3501) The intra prediction parameter derivation unit 304 decodes cclm_mode_flag from coded data.

(S3502) In a case that CCLM prediction is used, the processing transitions to S3503. In other cases, the intra prediction unit 3104 performs prediction other than CCLM prediction.

(S3503) The intra prediction parameter derivation unit 304 derives information about the type of CCLM prediction from CU information of the coded data. For example, mmlm_mode_flag and cclm_mode_idx in FIGS. 14 to 17 are decoded to derive whether the target block is in the MMLM mode, the CCCM mode, or another mode, or derive the reference position, the position of an adjacent pixel, or the like.

(S3504) In a case that the information about the type of CCLM prediction indicates the multi-model is not used, the processing transitions to S3507 and CCCM prediction with three or more parameters is used. On the other hand, in a case that multi-mode is used, CCCM prediction with two parameters is used.

(S3506) The intra prediction unit 3104 does not perform CCCM prediction. That is, luma-chroma prediction using the CCLM prediction parameter including three or more parameters is not performed, but two parameters of the weighting factor and the bias to the luma pixel are derived and the luma-chroma prediction using the two parameters is performed. For example, the prediction is performed using an expression (MMLM - 1).

(S3507) The intra prediction unit 3104 performs CCCM prediction. A CCLM prediction parameter including three or more parameters is derived, and luma-chroma prediction using the CCLM prediction parameter including the three or more parameters is performed. For example, the prediction is performed using expressions (CCCM - 1) and (CCCM - 2).

According to the above configuration, included are the CCLM prediction parameter derivation unit which is a CCLM prediction unit for generating a prediction image of a chroma image using a luma image and can classify groups according to luma pixel values and derive a plurality of CCLM prediction parameters for each group, and the CCLM prediction filter unit 310443 that generates a chroma prediction image using a luma reference image and the CCLM prediction parameters, and the CCLM prediction parameter derivation unit change the number of parameters of CCLM prediction depending on whether to perform splitting into two or more groups according to the pixel value of the luma image. Furthermore, the CCLM prediction parameter derivation unit 310442 derives the CCLM prediction parameter by using the number of parameters of the 2-parameter CCLM prediction in a case of performing classification into two or more groups according to the pixel value of the luma image, and otherwise derives the number of parameters using the number of parameters of 3-parameter CCLM prediction. Furthermore, provided is the video decoding apparatus including the parameter decoder 302 that decodes a CCLM flag indicating whether to perform 3-parameter CCLM prediction and a CCLM flag indicating whether to perform 2-parameter CCLM prediction from coded data, and the CCLM prediction unit, the video decoding apparatus deriving one CCLM prediction parameter in a case that the CCLM flag is 1 and deriving two or more CCLM prediction parameters in other cases.

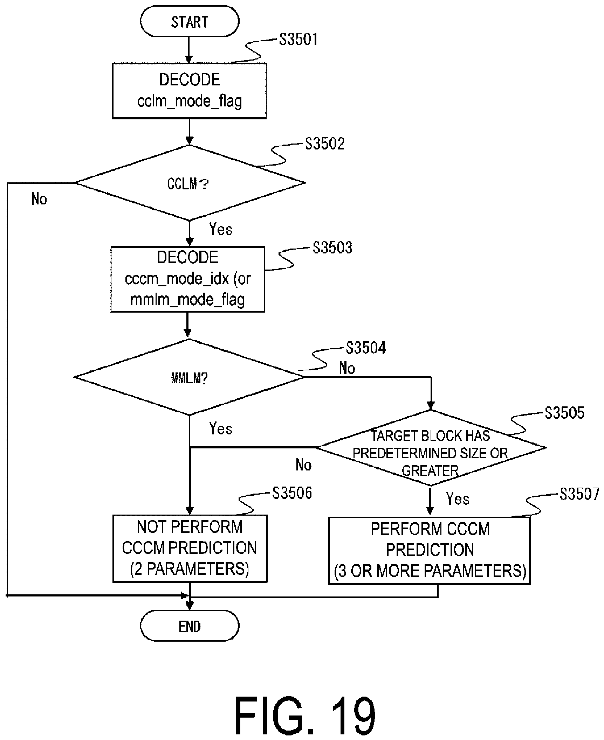

FIG. 19 is a flowchart illustrating an operation of the CCLM prediction unit according to an embodiment of the present invention.

(S3501) to (S3503) Since these steps have already been described with reference to FIG. 18, description thereof will be omitted.

(S3504) In a case that the information about the type of CCLM prediction indicates that multi-model is used, the processing transitions to S3506 and CCCM prediction is not used. On the contrary, in the case that multi-model is not used, the processing transitions to S3505.

(S3505) In a case that the size of the target block is smaller than a predetermined size, for example, in a case that cbWidth * cbHeight < TH, the processing transitions to S3506 and prediction of two-parameter multi-model is used without using CCCM prediction. In a case that the size of the target block is equal to or larger than a predetermined size, the processing transitions to S3507, and CCLM prediction with three or more parameters is performed using CCCM prediction. The above may be derived using cccm_mode_flag as follows.

cccm_mode_flag = ((cbWidth * cbHeight) >= TH ? 1:0) && cclm_mode_flag (S3506) and (S3507) Since these steps have already been described with reference to FIG. 18, description thereof will be omitted.

According to the above configuration, whether to use the CCCM mode is selected according to the block size without decoding the syntax from the coded data, and thus, the complexity reduction effect is achieved while maintaining the performance.

The CCLM prediction will be described below. In the figure, the target block and the neighboring block of the luma image are represented by pY[][] and pRefY[][]. The target block has a width bW and a height bH.

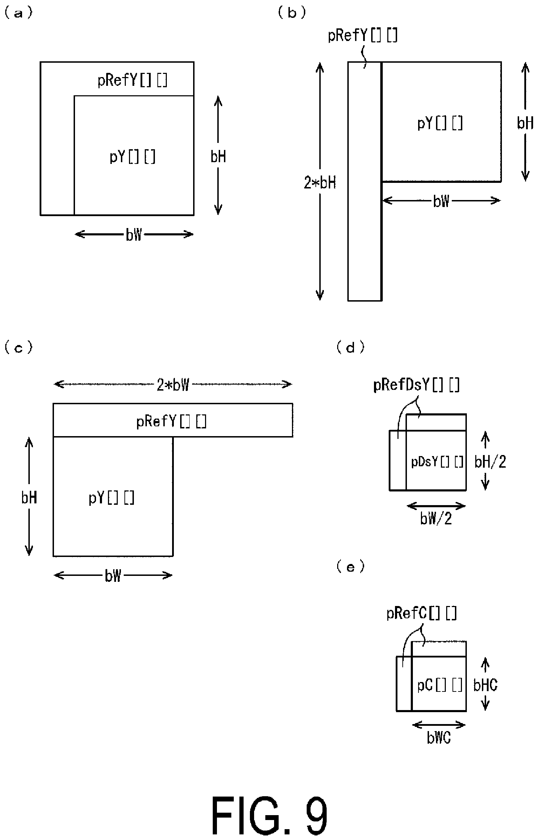

The CCLM prediction unit 31044 (unfiltered reference image setting unit 3102) derives a CCLM prediction parameter by using a luma adjacent image pRefY[][] of FIGS. 9 (a) to (c) and a chroma adjacent image pRefC[][] of FIG. 9(e) as reference regions. The CCLM prediction unit 31044 derives a prediction image of chrominance by using a luma target image pRef[].

In a case that IntraPredModeC is INTRA_LT_CCLM, INTRA_LT_MMLM, or INTRA_LT_CCCM_SINGLE, the CCLM prediction unit 31044 derives a CCLM prediction parameter using the pixel values of the top and left neighboring blocks of the target block as illustrated in (a). In a case that IntraPredModeC is 82 (INTRA_L_CCLM, INTRA_L_MMLM, or INTRA_L_CCM_SINGLE), the CCLM prediction parameter is derived using the pixel value of the left neighboring block as illustrated in (b). In a case that IntraPredModeC is 83 (INTRA_T_CCLM, INTRA_T_MMLM, or INTRA_T_CCCM_SINGLE), the CCLM prediction parameter is derived using the pixel value of the top neighboring block as illustrated in (c). The size of each region may be as follows. In (a), the upper side of the target block has a width bW and a height refH (refH > 1), and the left side of the target block has a height bH and a width refW (refW > 1). In (b), the height is 2 * bH and the width is refW. In (c), the width is 2 * bW, and the height is refH. In order to perform downsampling processing, refW and refH may be set equal to values larger than 1 in accordance with the number of taps of the downsampling filter. In addition, in (e), the target block and the neighboring block of the chroma image (Cb, Cr) are represented by pC[][] and pRefC[][]. The target block has a width bWC and a height bHC.

CCLM Prediction Unit

The CCLM prediction unit 31044 will be described with reference to FIG. 8. FIG. 8 is a block diagram illustrating an example of the configuration of the CCLM prediction unit 31044. The CCLM prediction unit 31044 includes a downsampling unit 310441, a CCLM prediction parameter derivation unit (parameter derivation unit) 310442, and a CCLM prediction filter unit 310443.

The downsampling unit 310441 downsamples pRefY[][] and pY[][] so as to cause matching with the size of the chroma image. In a case that a chroma format is 4:2:0, the number of pixels in the horizontal and vertical directions of pRefY[][] and pY[][] is sampled to 2:1, and the results are stored in pRefDsY[][] and pDsY[][] of FIG. 9(d). Note that bW/2 and bH/2 are equal to bWC and bHC, respectively. In a case that the chroma format is 4:2:2, the number of pixels in the horizontal direction of pRefY[][] and pY[][] is sampled to 2:1, and results are stored in pRefDsY[][] and pDsY[][]. In a case that the chroma format is 4:4:4, sampling is not performed, and pRefY[][] and pY[][] are stored in pRefDsY[][] and pDsY[][]. An example of the sampling is represented as in the following expressions.

pDsY[x][y] = (pY[2*x-1][2*y]+pY[2*x-1][2*y+1]+2*pY[2*x][2*y]+2* pY[2*x][2*y+1]+pY[2*x+1][2*y]+pY[2*x+1][2*y+1]+4) >>3 pRefDsY[x][y] = (pRefY[2*x-1][2*y]+pRefY[2*x-1][2*y+1]+2*pRefY[ 2*x][2*y]+2*pRefY[2*x][2*y+1]+pRefY[2*x+1][2*y] +pRefY[2*x+1][2*y+1]+4 )>>3

The CCLM prediction filter unit 310443 uses one reference pixel refSamples[x][y] as an input signal in a case of cccm_mode_flag = = 0, and outputs a prediction image predSamples[x][y] predicted by using the CCLM prediction parameters (a, b).

$$\mathtt{predSamples[x][y] = ((a*refSamples[x][y]) >> shiftA)+b \quad (CCLM-1)}$$

Here, refSamples is pDsY in FIG. 9(d), (a, b) is a CCLM prediction parameter derived by the CCLM prediction parameter derivation unit 310442, and predSamples[][] is a chroma prediction image (pC in FIG. 9(e)). Note that (a, b) is derived for Cb and Cr, respectively. In addition, shiftA is a normalized shift number indicating the accuracy of the value a, and a = af < < shiftA where af is the slope of decimal accuracy. For example, shiftA = 16.

Multi-adjacency

In a case of cccm_mode_flag = = 1, the CCLM prediction filter unit 310443 uses a reference image refSamples[x][y] and an adjacent pixel refSamples[x + dX][y + dY] as input signals, and outputs a prediction image predSamples[x][y] by using the CCLM prediction parameters (a, b). (dX, dY) is, for example, (-1, 0), (1, 0), (0, -1), (0, 1), and the like.

predSamples[x][y] =((a0 * refSamples[x][y] + Σ ak * refSamples[x + dXk][y + dYk]) >> shiftA) + b (CCCM - 1)

Here, Σ is the sum of k, and may be any one of k = 1, (dX1, dY1) = (-1, 0), (1, 0), (0, -1), and (0, 1).
Further, the weighting factor ak of the adjacent pixel may be a plurality of parameters.
For example, k = 1.. 2, (dX1, dY1) = (1, 0), (dX2, dY2) = (0, 1). In other words, it can be expressed in the following equation.

predSamples[x][y] = ((a0 * refSamples[x][y] + a1 * refSamples[x + 1][y] + a2 * refSamples[x][y + 1]) >> shiftA) + b (CCCM - 1)

In addition, in generating the prediction image predSamples of chrominance, in a case that cclm_mode_flag = = 0, the luma image after downsampling may be used, and in a case that cccm_mode_flag = = 1, the luma image before downsampling may be used. For example, in a case that cccm_mode_flag = = 1, predSamples may be derived as described in the following equation.

predSamples[x][y] = (a0 * refSamples[x * SubWidthC][y * SubHeightC] + Σ ak * refSamples[x * SubWidthC + dXk][y * SubHeightC + dYk]) >> shiftA) + b (CCCM - 2 ) It may be derived as follows in accordance with the syntax element sps_chroma_format_idc in the coded data.
In a case that sps_chroma_format_idc = 0 (Monocrome), SubWidthC = 1, SubHeightC = 1
In a case that sps_chroma_format_idc = 1 (4:2:0), SubWidthC = 2, SubHeightC = 2
In a case that sps_chroma_format_idc = 2 (4:2:2), SubWidthC = 2, SubHeightC = 1
In a case that sps_chroma_format_idc = 3 (4:4:4), SubWidthC = 1, SubHeightC = 1

Furthermore, filtering processing may be performed using multi-model.

Multi-model

In the case of IntraPredModeC == INTRA_LT_MMLM, INTRA_L_MMLM, or INTRA_T_MMLM (multi-mode), the luma signal may be classified according to the magnitude of the luma signal, a plurality of CCLM prediction parameters may be derived according to the classification, and the prediction image may be derived according to the prediction parameters. For example, by using a certain threshold thVal, pixels are classified as modeId in accordance with the magnitude of refSamples as follows. Then, filtering processing is performed using determined CCLM prediction parameters a[modelId] and b[modelId] based on modeId.

```
if (refSamples[x][y] > thVal)

    modelId=0

else

    modelId=1

predSamples[x][y] =((a0[modeId]*refSamples[x][y])>>shiftA)+b   (MM

LM-1)
```

Multi-model and Multi-adjacency

In the case of IntraPredModeC = = INTRA_LT_MMLM_CM_CCCM, INTRA_L_MMLM, and INTRA_T_MMLM_CCCM, that is, in a case that MMLM and CCCM are used in combination, the following processing is performed.

predSamples[x][y] = ((a0[modelId] * refSamples[x][y] + Σ ak[modelId] * re fSamples[x + 1][y]) >> shiftA) + b (CCCM - 1) Note that this configuration is not used in the exclusive configuration described above.

As illustrated in FIG. 8(b), the CCLM prediction filter unit 310443 includes a linear prediction unit 310444. The linear prediction unit 310444 uses refSamples[][] as an input signal, and outputs predSamples[][] by using the CCLM prediction parameter (a, b).

More specifically, the linear prediction unit 310444 derives chrominance Cb or Cr from luminance Y according to the following equation using the CCLM prediction parameters (a, b), and outputs predSamples[][] using the chrominance.

$$Cb \text{ (or } Cr) = aY + b$$

The CCLM prediction parameter derivation unit 310442 derives a CCLM prediction parameter by using the downsampled neighboring block pRefY (pRefDsY[][] in FIG. 9(d)) whose luminance is downsampled and the neighboring block pRefC[][] (pRefC[][] in FIG. 9(e)) of chrominance as input signals. The CCLM prediction parameter derivation unit 310442 outputs the derived CCLM prediction parameters (a, b) to the CCLM prediction filter unit 310443.

CCLM Prediction Parameter Derivation Unit

In the case of two parameters (in the case of cccm_mode _flag = = 0, or IntraPredModeC = any one of INTRA_LT_CCLM, INTRA_L_CCLM, INTRA_T_CCLM, INTRA_LT_MMLM, INTRA_L_MMLM, and INTRA_T_MMLM), the CCLM prediction parameter derivation unit 310442 derives the CCLM prediction parameters (a, b) in the case of linearly predicting the prediction block predSamples[][] of the target block from the reference block refSamples[][].

In the derivation of the CCLM prediction parameters (a, b), the CCLM prediction parameter derivation unit 310442 derives a point (x1, y1) at which the luma value Y becomes maximum (Y_MAX) and a point (x2, y2) at which the luma value Y becomes minimum (Y_MIN) from a set of neighboring blocks (luma value Y, chroma value C). Next, the pixel values of (x1, y1) and (x2, y2) on the pRefC corresponding to (x1, y1) and (x2, y2) on the pRefDsY are defined as C_MAX (or C_Y_MAX) and C_MIN (or C_Y_MIN), respectively. Then, as illustrated in FIG. 10(a), a straight line connecting (Y_MAX, C_MAX) and (Y_MIN, C_MIN) is obtained on a graph in which Y and C are plotted on x and y axes, respectively. The CCLM prediction parameters (a, b) of this straight line can be derived using the following equation.

$$a= (C\_MAX-C\_MIN) \ / \ (Y\_MAX-Y\_MIN)$$

$$b= C\_MIN- (a*Y\_MIN)$$

In a case that (a, b) is used, shiftA of formula (CCLM - 1) = 0.

Here, in a case of chrominance being Cb, (C_MAX, C_MIN) are the pixel values of (x1, y1) and (x2, y2) of the neighboring block pRefCb[][] of Cb, and in a case of chrominance being Cr, (C_MAX, C_MIN) are the pixel values of (x1, y1) and (x2, y2) of the neighboring block pRefCr[][] of Cr.

The CCLM prediction parameter derivation unit 310442 derives the CCLM prediction parameters a, b, and shiftA from the difference value diff of the luminance and the difference value diffC of the chrominance by using the reciprocal table divSigTable.

$$diff = maxY - minY$$

In a case of diff! $= 0$

$$diffC = maxC \ ? \ minC$$

$$x = Floor(Log2(diff))$$

$$normDiff = ((diff << 4) >> x) \ \& \ 15$$

$$x += (normDiff!=0) \ ? \ 1 \ : \ 0$$

$$y = Abs(diffC)>0 \ ? \ Floor(Log2(Abs(diffC))) + 1 \ : \ 0$$

$$a = (diffC * (divSigTable[normDiff] | 8) + 2 * y \ ? \ 1) >> y$$

$$shiftA = ((3 + x \ ? \ y) < 1) \ ? \ 1 \ : \ 3 + x \ ? \ y$$

$$a = ((3 + x \ ? \ y \ ) < 1) \ ? \ Sign(a) * 15 \ : \ a$$

$$b = minC \ ? \ ((a * minY) >> k)$$

$$divSigTable[ \ ] = \{ 0, 7, 6, 5, 5, 4, 4, 3, 3, 2, 2, 1, 1, 1, 1, 0 \}$$

In a case of diff $== 0$

$$shiftA = 0$$

$$a = 0$$

$$b = minC$$

In the case of three or more parameters (in the case of cccm_mode_flag = = 1, IntraPredModeC = any one of INTRA_LT_CCCM_SINGLE, INTRA_L_CCCM_SINGLE, and INTRA_T_CCCM_SINGLE), the CCLM prediction parameter derivation unit 310442 may derive CCLM prediction parameters including N elements (a0, a1,.. aN - 2, b).

The CCLM prediction parameter derivation unit 310442 derives the following temporary reference arrays refX[][] and refY[] from the reference images pRefY and pRefC.

$$refX[0][cnt]=pRefY[x][y]$$

$$refX[1][cnt]=pRefY[x+dX1][y+dY1]$$

$$refX[2][cnt]=pRefY[x+dX2][y+dY2]$$

$$refX[N-2][cnt]=pRefY[x+dXN-2][y+dYN-2]$$

$$refX[N-1][cnt]=1$$

$$refY[cnt] = pRefC[x/SubWidthC][y/SubHeightC]$$

$$cnt=cnt+1$$

The above processing is repeated for (x, y) of the reference region of the target block, and cnt is incremented by 1 each time the processing is repeated.

The CCLM prediction parameter derivation unit 310442 derives the following matrix sumXX and vector sumXY from the reference images pRefY and pRefC.

$$sumXX[i][j] = \Sigma refX[i][cnt]*refX[j][cnt]$$

$$sumXY[i] = \Sigma refX[i][cnt]*refY[cnt]$$

Here, $\Sigma$ represents the sum for cnt. Note that sumXX and sumXY may be derived from direct addition to sumXX and sumXY from pRefY and pRefC without using refX[][] and refY[]. Furthermore, a normalization term is added to the diagonal component.

$$sumXX[i][i] = sumXX[i][i] + (1<<(bitDepth-1))$$

The CCLM prediction parameter derivation unit 310442 derives cparam [k], k = 0,..N - 1 by using a linear operation corresponding to cparam = sumXY * inverse (sumXX). Here, inverse(X) is the inverse matrix of X. N is the number of parameters, and here N > = 3. Number of adjacent pixels + 1.

$$a0 = cparam[0]$$

$$a1 = cparam[2]$$

$$...$$

$$b = cparam[N-1]$$

Derivation of CCLM Prediction Parameter in Case of MMLM

In the case of MMLM, a plurality of CCLM prediction parameters are derived for the target block. Then, as illustrated in FIG. 10(b), a straight line connecting (Y_MAX, C_MAX) and (Y_MIN, C_MIN) is obtained on a graph in which Y and C are plotted on x and y axes, respectively. However, unlike FIG. 10(a), there are a plurality of luma-chroma models, and a straight line connecting (Y_MAX, C_MAX) and (Y_MIN, C_MIN) is obtained for each of the models. Here, classification is performed according to the luma value of the reference region, and modelId is derived.

$$if\ (pRefY[x][y] > thVal)$$

$$modelId=0$$

$$else$$

$$modelId=1$$

Here, thVal is a threshold for performing classification, and the average value of luma values of the target block (or the average value of downsampled luma values, or the average value of luma values sampled from the reference region) may be used.

For each value of modelId, refX[modelId][N][cnt] and refY[modelId][N][cnt] may be derived, sumXX[modelId][i][i] and sumXX[modelId][i][i] may be derived, and a CCLM prediction parameter may be derived by using the methods described above.

$$a0[modelId] = cparam[0]$$

$$a1[modelId] = cparam[1]$$

$$...$$

$$b[modelId] = cparam[N-1]$$

Realization by Hardware and Realization by Software

Each block of the above-mentioned video decoding apparatus 31 and the video coding apparatus 11 may be realized as a hardware by a logical circuit formed on an integrated circuit (IC chip), or may be realized as a software using a Central Processing Unit (CPU).

In the latter case, each apparatus includes a CPU performing a command of a program to implement each function, a Read Only Memory (ROM) stored in the program, a Random Access Memory (RAM) developing the program, and a storage apparatus (recording medium) such as a memory storing the program and various data, and the like. In addition, an objective of the embodiment of the present invention can be achieved by supplying, to each of the apparatuses, the recording medium that records, in a computer readable form, program codes of a control program (executable program, intermediate code program, source program) of each of the apparatuses that is software for realizing the above-described functions and by reading and performing, by the computer (or a CPU or an MPU), the program codes recorded in the recording medium.

As the recording medium, for example, tapes including a magnetic tape, a cassette tape and the like, discs including a magnetic disc such as a floppy (trade name) disk/a hard disk and an optical disc such as a Compact Disc Read-Only Memory (CD-ROM)/Magneto-Optical disc (MO disc)/Mini Disc (MD)/Digital Versatile Disc(DVD: trade name)/CD Recordable (CD-R)/Blu-ray Disc (trade name), cards such as an IC card (including a memory card)/an optical card, semiconductor memories such as a mask ROM/Erasable Programmable Read-Only Memory (EPROM)/Electrically Erasable and Programmable Read-Only Memory (EEPROM: trade name)/a flash ROM, logical circuits such as a Programmable logic device (PLD) and a Field Programmable Gate Array (FPGA), or the like can be used.

Each of the apparatuses may be configured to be connectable to a communication network, and the program codes may be supplied through the communication network. The communication network may be any network as long as the network is capable of transmitting the program codes, and is not limited to a particular communication network. For example, the Internet, an intranet, an extranet, a Local Area Network (LAN), an Integrated Services Digital Network (ISDN), a Value-Added Network (VAN), a Community Antenna television/Cable Television (CATV) communication network, a Virtual Private Network, a telephone network, a mobile communication network, a satellite communication network, and the like are available. In addition, a transmission medium constituting this communication network may be any medium as long as the medium can transmit a program code, and is not limited to a particular configuration or type of transmission medium. For example, a wired transmission medium such as Institute of Electrical and Electronic Engineers (IEEE) 1394, a USB, a power line carrier, a cable TV line, a telephone line, an Asymmetric Digital Subscriber Line (ADSL) line, and a wireless transmission medium such as infrared ray of Infrared Data Association (IrDA) or a remote control, BlueTooth (trade name), IEEE 802.11 wireless communication, High Data Rate (HDR), Near Field Communication (NFC), Digital Living Network Alliance (DLNA: trade name), a cellular telephone network, a satellite channel, a terrestrial digital broadcast network are available. Note that the embodiment of the present invention can be also realized in the form of computer data signals embedded in a carrier wave such that the transmission of the program codes is embodied in electronic transmission.

An embodiment of the present invention is not limited to the embodiments described above and various changes can be made within the scope indicated by the claims. That is, embodiments obtained by combining technical means appropriately modified within the scope indicated by the claims are also included in the technical scope of the present invention.

Reference Signs List

31 Image decoding apparatus
301 Entropy decoder
302 Parameter decoder
303 Inter prediction parameter derivation unit
304 Intra prediction parameter derivation unit
308 Prediction image generation unit
309 Inter prediction image generation unit
310 Intra prediction image generation unit
3104 Prediction unit (intra prediction unit)
31044 CCLM prediction unit (prediction image generation apparatus)
310441 Downsampling unit
310442 CCLM prediction parameter derivation unit (parameter derivation unit)
310443 CCLM prediction filter unit
311 Inverse quantization and inverse transform processing unit
312 Addition unit
320 Prediction parameter derivation unit
11 Image coding apparatus
101 Prediction image generation unit
102 Subtraction unit
103 Transform and quantization unit
104 Entropy coder
105 Inverse quantization and inverse transform processing unit
107 Loop filter
110 Coding parameter determination unit
111 Parameter coder
112 Inter prediction parameter derivation unit
113 Intra prediction parameter derivation unit
120 Prediction parameter derivation unit

**Claims**

1.  A CCLM prediction unit for generating a prediction image of a chroma image by using a luma image, the CCLM prediction unit comprising:

    a CCLM prediction parameter derivation unit configured to derive a CCLM prediction parameter including a first weight, a second weight, and a first offset value by using a reference pixel of a reference image adjacent to a target block and an adjacent pixel to the reference pixel; and
    a CCLM prediction filter unit configured to generate a chroma prediction image by using two luma pixels including a target pixel of the target block and an adjacent pixel to the target pixel and the CCLM prediction parameter, wherein
    the CCLM prediction filter unit derives a pixel value of a prediction pixel from a sum of a product of the target pixel and the first weight, a product of the adjacent pixel to the target pixel and the second weight, and the first offset value.

2.  The CCLM prediction unit according to claim 1, wherein

a position of an adjacent pixel in the reference image and the target image is a pixel (x + 1, y) to the right of the target pixel (x, y).

3. A video decoding apparatus comprising:

the CCLM prediction unit according to claim 1; and
a parameter decoder configured to decode an index indicating a position of an adjacent pixel from coded data, wherein
the CCLM prediction parameter derivation unit keeps the number of CCLM prediction parameters constant regardless of the index, and derives the CCLM prediction parameter by switching a position of the adjacent pixel to the reference pixel according to the index, and
the CCLM filter unit derives a prediction image by switching the adjacent pixel according to the index.

4. A video coding apparatus comprising:

the CCLM prediction unit according to claim 1; and
a parameter coder configured to code an index indicating a position of an adjacent pixel, the index being derived from an image, wherein
the CCLM prediction parameter derivation unit keeps the number of CCLM prediction parameters constant regardless of the index, and derives the CCLM prediction parameters by switching a position of the adjacent pixel to the reference pixel according to the index, and
the CCLM filter unit derives a prediction image by switching the adjacent pixel according to the index.

5. The video decoding apparatus according to claim 3, wherein

the parameter decoder decodes the index from coded data of a sequence header, a slice header, or a CTU header, and
derives a flag indicating whether to perform CCLM prediction from coded data; and
the CCLM filter unit derives a prediction image of the target block.

6. A CCLM prediction unit for generating a prediction image of a chroma image by using a luma image, the CCLM prediction unit comprising:

a CCLM prediction parameter derivation unit configured to derive a CCLM prediction parameter; and
a CCLM prediction filter unit configured to generate a chroma prediction image by using a luma reference image and the CCLM prediction parameter, wherein
the CCLM prediction unit includes
a linear predictor configured to derive two parameters as a multiplication coefficient and a bias coefficient, and a linear predictor configured to derive three or more parameters, and
a multi-model for classifying a luma signal into a group according to a magnitude of the luma signal and deriving a plurality of types of the CCLM prediction parameters according to the classification, and a single model for deriving one type of the CCLM prediction parameter, and
in a case of the multi-model, three or more parameters are not derived.

7. The CCLM prediction unit according to claim 6, wherein
the CCLM prediction unit decodes a syntax element including whether to perform classification into two groups, and in a case that the syntax element indicates that one group is to be used, further decodes a syntax element indicating whether to derive three or more parameters.

8. The CCLM prediction unit according to claim 6, wherein
the CCLM prediction unit decodes a syntax element indicating whether to derive three or more parameters, and in a case that the syntax element indicates two parameters, further decodes a syntax element indicating whether to perform classification into two groups.

FIG. 1

(a) CODED VIDEO SEQUENCE | VPS | SPS#0 | SPS#1 | PPS#0 | PPS#1 | SEI | PICT #0 | PICT #1

(b) CODED PICTURE | SLICE 0 | SLICE 1 | ------------ | SLICE NS - 1

(c) CODING SLICE | SLICE HEADER | SLICE DATA

(d) CODING SLICE HEADER | CODING TREE UNIT (CTU) | CTU | CTU | CTU | CTU | CTU | CTU | CTU | CTU

(e) CODING TREE UNIT

(f) CODING UNIT | CUH | PREDICTION PARAMETER | TRANSFORM PARAMETER | QUANTIZED TRANSFORM COEFFICIENT

FIG. 2

FIG. 3

FIG. 4

FIG. 5

(a)

UNFILTERED REFERENCE IMAGE r[x][-1]

UNFILTERED REFERENCE IMAGE r[-1][-1]

PREDICTION TARGET BLOCK Pred[x][y]

UNFILTERED REFERENCE IMAGE r[-1][y]

(b)

FILTERED REFERENCE IMAGE s[x][-1]

FILTERED REFERENCE IMAGE s[-1][-1]

TEMPORARY PREDICTION IMAGE q[x][y]

FILTERED REFERENCE IMAGE s[-1][y]

# FIG. 6

INTRA PREDICTION IMAGE GENERATION UNIT /310

PREDICTION UNIT /3104

Planar PREDICTION UNIT /31041

DC PREDICTION UNIT /31042

Angular PREDICTION UNIT /31043

CCLM PREDICTION UNIT /31044

INTRA PREDICTION PARAMETER DECODER /304

PREDICTION PARAMETER MEMORY /307

PREDICTION TARGET BLOCK SETTING UNIT /3101

FILTERED REFERENCE IMAGE SETTING UNIT /3103

UNFILTERED REFERENCE IMAGE SETTING UNIT /3102

PREDICTION IMAGE CORRECTOR /3105

PREDICTION IMAGE (CORRECTED PREDICTION IMAGE)

REFERENCE PICTURE MEMORY /306

# FIG. 7

(a)

DOWNSAMPLING UNIT 310441

31044

CCLM PREDICTION
UNIT

ADJACENT
IMAGE
pRefY[][]
pRefC[][]

310442

CCLM PREDICTION
PARAMETER
DERIVATION UNIT

CCCM
PREDICTION
PARAMETER

REFERENCE
IMAGE
refSamples[]

310443

CCLM PREDICTION
FILTER UNIT 310444

LINEAR
PREDICTION
UNIT

PREDICTION IMAGE
(predSamples[])

(b)

| intra_chroma_pred_ | IntraPredModeY | | | | |
|---|---|---|---|---|---|
| mode | 0 | 50 | 18 | 1 | X ( 0<=X<=66 ) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 0 | 50 | 18 | 1 | X |

# FIG. 8

( a )

pRefY[ ] [ ]

pY[ ] [ ]

bH

bW

( b )

pRefY[ ] [ ]

2*bH

pY[ ] [ ]

bH

bW

( c )

2*bW

pRefY[ ] [ ]

bH

pY[ ] [ ]

bW

( d )

pRefDsY[ ] [ ]

pDsY[ ] [ ]

bH/2

bW/2

( e )

pRefC[ ] [ ]

pC[ ] [ ]

bHC

bWC

# FIG. 9

(a)

(b)

FIG. 10

FIG. 11

FIG. 12

(a)

|     | x−1 | x | x+1 | x+2 |
|-----|-----|---|-----|-----|
| y−1 |     |   |     |     |
| y   |     | ● | ◆   |     |
| y+1 |     |   |     |     |
| y+2 |     |   |     |     |

(b)

|     | x−1 | x | x+1 | x+2 |
|-----|-----|---|-----|-----|
| y−1 |     |   |     |     |
| y   |     | ● |     |     |
| y+1 |     | ◆ |     |     |
| y+2 |     |   |     |     |

(c)

|     | x−1 | x | x+1 | x+2 |
|-----|-----|---|-----|-----|
| y−1 |     | ● |     |     |
| y   |     | ◆ |     |     |
| y+1 |     |   |     |     |
| y+2 |     |   |     |     |

(d)

|     | x−1 | x | x+1 | x+2 |
|-----|-----|---|-----|-----|
| y−1 |     |   |     |     |
| y   | ◆   | ● |     |     |
| y+1 |     |   |     |     |
| y+2 |     |   |     |     |

# FIG. 13

(a)

| coding_unit( x0, y0, cbWidth, cbHeight, cqtDepth, treeType, mode Type ) { | Descriptor |
|---|---|
| .. | |
| if( CuPredMode[ chType ][ x0 ][ y0 ] = = MODE_INTRA ) { | |
| .. | |
| if( ( treeType = = SINGLE_TREE \|\| treeType = = DUAL_TREE_CHROMA ) && sps_chroma_format_idc != 0 ) { | |
| **cclm_mode_flag** | ae(v) |
| if( cclm_mode_flag ) { | |
| **mmlm_mode_flag** | ae(v) |
| if (mmlm_mode_flag == 0) | ← |
| **cccm_mode_flag** | ae(v) |
| **cclm_ref_idx** | ae(v) |
| } else { | |
| **intra_chroma_pred_mode** | ae(v) |
| } | |
| ... | |
| } | |

(b)

| IntraPredModeC | cclm_mode _flag | mmlm_mod e_flag | cccm_mod e_flag | cccm_ref _idx |
|---|---|---|---|---|
| INTRA_LT_CCLM | 1 | 0 | 0 | 0 |
| INTRA_L_CCLM | 1 | 0 | 0 | 1 |
| INTRA_T_CCLM | 1 | 0 | 0 | 2 |
| INTRA_LT_MMLM | 1 | 1 | – | 0 |
| INTRA_L_MMLM | 1 | 1 | – | 1 |
| INTRA_T_MMLM | 1 | 1 | – | 2 |
| INTRA_LT_CCCM_SINGLE | 1 | 0 | 1 | 0 |
| INTRA_L_CCCM_SINGLE | 1 | 0 | 1 | 1 |
| INTRA_T_CCCM_SINGLE | 1 | 0 | 1 | 2 |

# FIG. 14

(a)

| coding_unit( x0, y0, cbWidth, cbHeight, cqtDepth, treeType, mode Type ) { | Descriptor |
|---|---|
| .. | |
|   if( CuPredMode[ chType ][ x0 ][ y0 ] = = MODE_INTRA ) { | |
| .. | |
|     if( ( treeType = = SINGLE_TREE \|\| | |
|         treeType = = DUAL_TREE_CHROMA ) && | |
|         sps_chroma_format_idc != 0 ) { | |
|       **cclm_mode_flag** | ae(v) |
|       if( cclm_mode_flag ) { | |
|         **cccm_mode_flag** | ae(v) |
|         if (cccm_mode_flag == 0) | |
|           **mmlm_mode_flag** | ae(v) |
|           **cclm_ref_idx** | ae(v) |
|       } else { | |
|         **intra_chroma_pred_mode** | ae(v) |
|       } | |
|     ... | |
| } | |

(b)

| IntraPredModeC | cclm_mode _flag | cccm_mode_flag | mmlm_mode_flag | cccm_ref_idx |
|---|---|---|---|---|
| INTRA_LT_CCLM | 1 | 0 | 0 | 0 |
| INTRA_L_CCLM | 1 | 0 | 0 | 1 |
| INTRA_T_CCLM | 1 | 0 | 0 | 2 |
| INTRA_LT_MMLM | 1 | 0 | 1 | 0 |
| INTRA_L_MMLM | 1 | 0 | 1 | 1 |
| INTRA_T_MMLM | 1 | 0 | 1 | 2 |
| INTRA_LT_CCCM_SINGLE | 1 | 1 | - | 0 |
| INTRA_L_CCCM_SINGLE | 1 | 1 | - | 1 |
| INTRA_T_CCCM_SINGLE | 1 | 1 | - | 2 |

# FIG. 15

(a)

| coding_unit( x0, y0, cbWidth, cbHeight, cqtDepth, treeType, mode Type ) { | Descriptor |
|---|---|
| .. | |
| if( CuPredMode[ chType ][ x0 ][ y0 ] = = MODE_INTRA ) { | |
| .. | |
| if( ( treeType = = SINGLE_TREE \|\| treeType = = DUAL_TREE_CHROMA ) && sps_chroma_format_idc != 0 ) { | |
| **cclm_mode_flag** | ae(v) |
| if( cclm_mode_flag ) { | |
| **cclm_mode_idx** | ae(v) |
| if (IsMMLM(cclm_mode_idx) ) | ⟵ |
| **cccm_mode_flag** | ae(v) |
| } else { | |
| **intra_chroma_pred_mode** | ae(v) |
| } | |
| ... | |
| } | |

(b)

| IntraPredModeC | cclm_mode_flag | cclm_mode_idx | cccm_mode_flag |
|---|---|---|---|
| INTRA_LT_CCLM | 1 | 0 | 0 |
| INTRA_L_CCLM | 1 | 2 | 0 |
| INTRA_T_CCLM | 1 | 3 | 0 |
| INTRA_LT_MMLM | 1 | 1 | – |
| INTRA_L_MMLM | 1 | 4 | – |
| INTRA_T_MMLM | 1 | 5 | – |
| INTRA_LT_CCCM_SINGLE | 1 | 0 | 1 |
| INTRA_L_CCCM_SINGLE | 1 | 2 | 1 |
| INTRA_T_CCCM_SINGLE | 1 | 3 | 1 |

# FIG. 16

(a)

| coding_unit( x0, y0, cbWidth, cbHeight, cqtDepth, treeType, mode Type ) { | Descriptor |
|---|---|
| .. | |
| if( CuPredMode[ chType ][ x0 ][ y0 ] = = MODE_INTRA ) { | |
| .. | |
| if( ( treeType = = SINGLE_TREE \|\| treeType = = DUAL_TREE_CHROMA ) && sps_chroma_format_idc != 0 ) { | |
| **cclm_mode_flag** | ae(v) |
| if( cclm_mode_flag ) { | |
| **cccm_mode_flag** | ae(v) |
| **cccm_mode_idx** | ae(v) |
| } else { | |
| **intra_chroma_pred_mode** | ae(v) |
| } | |
| ... | |
| } | |

(b)

| IntraPredModeC | cclm_mode_flag | cccm_mode_flag | cclm_mode_idx |
|---|---|---|---|
| INTRA_LT_CCLM | 1 | 0 | 0 |
| INTRA_L_CCLM | 1 | 0 | 2 |
| INTRA_T_CCLM | 1 | 0 | 3 |
| INTRA_LT_MMLM | 1 | – | 1 |
| INTRA_L_MMLM | 1 | – | 4 |
| INTRA_T_MMLM | 1 | – | 5 |
| INTRA_LT_CCCM_SINGLE | 1 | 1 | 0 |
| INTRA_L_CCCM_SINGLE | 1 | 1 | 1 |
| INTRA_T_CCCM_SINGLE | 1 | 1 | 2 |

# FIG. 17

START

—S3501

DECODE
cclm_mode_flag

—S3502

CCLM ?

No

Yes

—S3503

DECODE
cccm_mode_idx (or
mmlm_mode_flag)

—S3504

MMLM?

No

Yes

—S3506

NOT PERFORM CCCM
PREDICTION
(2 PARAMETERS)

—S3507

PERFORM CCCM
PREDICTION
(3 OR MORE PARAMETERS)

END

# FIG. 18

START

S3501

DECODE
cclm_mode_flag

S3502

CCLM?

No

Yes

S3503

DECODE
cccm_mode_idx (or
mmlm_mode_flag

S3504

MMLM?

No

Yes

S3505

TARGET BLOCK HAS
PREDETERMINED SIZE OR
GREATER

No

Yes

S3506

NOT PERFORM
CCCM PREDICTION
(2 PARAMETERS)

S3507

PERFORM CCCM
PREDICTION
(3 OR MORE PARAMETERS)

END

# FIG. 19

# EP 4 554 212 A1

<table>
<tr><td colspan="2" align="center"><strong>INTERNATIONAL SEARCH REPORT</strong></td><td>International application No.<br><strong>PCT/JP2023/024662</strong></td></tr>
</table>

**A. CLASSIFICATION OF SUBJECT MATTER**

*H04N 19/117*(2014.01)i; *H04N 19/136*(2014.01)i; *H04N 19/176*(2014.01)i; *H04N 19/186*(2014.01)i; *H04N 19/593*(2014.01)i; *H04N 19/70*(2014.01)i

FI: H04N19/117; H04N19/136; H04N19/176; H04N19/186; H04N19/593; H04N19/70

According to International Patent Classification (IPC) or to both national classification and IPC

**B. FIELDS SEARCHED**

Minimum documentation searched (classification system followed by classification symbols)

H04N19/117; H04N19/136; H04N19/176; H04N19/186; H04N19/593; H04N19/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/129990 A1 (SHARP KABUSHIKI KAISHA) 25 June 2020 (2020-06-25)<br>paragraphs [0138]-[0157], fig. 11-14 | 1-8 |
| A | JP 2022-24208 A (SHARP KABUSHIKI KAISHA) 09 February 2022 (2022-02-09)<br>paragraphs [0236]-[0242] | 1-8 |
| A | JP 2022-516180 A (HUAWEI TECHNOLOGIES CO., LTD.) 24 February 2022 (2022-02-24)<br>paragraphs [0159]-[0161] | 1-8 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024662**

| Patent document cited in search report | | | Publication date (day/month/year) | Patent family member(s) | | | Publication date (day/month/year) |
|---|---|---|---|---|---|---|---|
| WO | 2020/129990 | A1 | 25 June 2020 | US paragraphs [0164]-[0184], fig. 11-14 | 2022/0070491 | A1 | |
| | | | | US | 2022/0368944 | A1 | |
| | | | | EP | 3902261 | A1 | |
| | | | | CN | 113196776 | A | |
| JP | 2022-24208 | A | 09 February 2022 | US paragraphs [0314]-[0322] | 2022/0021892 | A1 | |
| | | | | WO | 2020/116376 | A1 | |
| JP | 2022-516180 | A | 24 February 2022 | US paragraphs [0181]-[0183] | 2021/0329261 | A1 | |
| | | | | WO | 2020/140700 | A1 | |
| | | | | EP | 3907995 | A1 | |
| | | | | CN | 111405287 | A | |
| | | | | CN | 111919444 | A | |
| | | | | KR | 10-2021-0103573 | A | |
| | | | | CA | 3125500 | A1 | |

Form PCT/ISA/210 (patent family annex) (January 2015)

**EP 4 554 212 A1**

**Patent documents cited in the description**

- JP 2022107511 A